(19) **Europäisches Patentamt / European Patent Office / Office européen des brevets**

(11) **EP 4 668 937 A2**

(12) **EUROPEAN PATENT APPLICATION**

(43) Date of publication:
24.12.2025 Bulletin 2025/52

(21) Application number: 25185077.2

(22) Date of filing: 30.09.2019

(51) International Patent Classification (IPC):
*H04W 72/04* (2023.01)

(52) Cooperative Patent Classification (CPC):
H04L 5/0094; H04L 5/001; H04L 5/0044;
H04W 72/04

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(62) Document number(s) of the earlier application(s) in accordance with Art. 76 EPC:
19947977.5 / 4 033 831

(71) Applicant: Huawei Technologies Co., Ltd.
Shenzhen, Guangdong 518129 (CN)

(72) Inventors:
• TIE, Xiaolei
Shenzhen, 518129 (CN)
• XUE, Lixia
Shenzhen, 518129 (CN)

• HUANG, Wenwen
Shenzhen, 518129 (CN)

(74) Representative: Roth, Sebastian
Mitscherlich PartmbB
Patent- und Rechtsanwälte
Karlstraße 7
80333 München (DE)

Remarks:
•This application was filed on 25-06-2025 as a divisional application to the application mentioned under INID code 62.
•Claims filed after the date of filing of the divisional application (Rule 68(4) EPC).

(54) **COMMUNICATION METHOD AND COMMUNICATIONS APPARATUS**

(57) This application relates to the field of communications technologies, and discloses a communication method and a communications apparatus, to provide a solution in which a minimum KO and a minimum K2 can be jointly indicated, to indicate a valid minimum KO of a downlink BWP of a terminal device and a valid minimum K2 of an uplink BWP of the terminal device. The method includes: sending, by a network device, downlink control information to a terminal device, where the downlink control information includes indication information, and the indication information indicates one of at least one minimum KO configured for a downlink BWP of the terminal device, or the indication information indicates one of at least one minimum K2 configured for an uplink BWP of the terminal device, where there is a correspondence between the minimum KO configured for the downlink BWP and the minimum K2 configured for the uplink BWP.

EP 4 668 937 A2

## Description

## TECHNICAL FIELD

This application relates to the field of communications technologies, and in particular, to a communication method and a communications apparatus.

## BACKGROUND

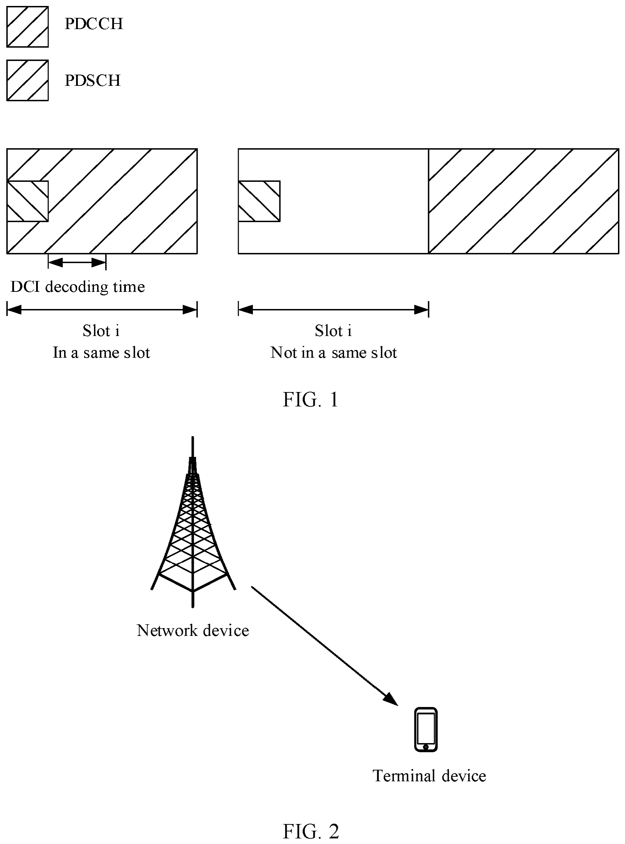

In a communications system, power consumption of a terminal device is an important aspect of user experience. In the 3GPP Release 16 (R16) of the new radio (new radio, NR) standard, it is proposed that power consumption of a terminal device needs to be reduced. A method for reducing the power consumption is to improve a data scheduling mechanism of a network device. For example, cross-slot scheduling is used to reduce the power consumption of the terminal device. Referring to FIG. 1, a network device schedules a physical downlink shared channel (physical downlink shared channel, PDSCH) for a terminal device over a physical downlink control channel (physical downlink control channel, PDCCH). If a slot (slot) offset between the PDCCH and the scheduled PDSCH is greater than 0, the PDCCH and the scheduled PDSCH are not in a same slot; and if a slot offset between the PDCCH and the scheduled PDSCH is 0, the PDCCH and the scheduled PDSCH are in a same slot. When the slot offset is greater than 0, the terminal device needs to receive and process the PDCCH in one slot, does not need to buffer the PDSCH, and may relax processing time of the PDCCH, so that a component of the terminal device can reduce a clock rate and a voltage. Similarly, cross-slot scheduling is used for a physical uplink shared channel (physical uplink shared channel, PUSCH), so that power consumption is also reduced.

In an NR system, a plurality of downlink (downlink, DL) bandwidth parts (bandwidth part, BWP) can be configured on each downlink carrier, and a plurality of uplink (uplink, UL) BWPs can be configured on each uplink carrier. A network device may configure, for a terminal device, a plurality of downlink BWPs on each downlink carrier and a plurality of uplink BWPs on each uplink carrier, independently configure one or two minimum applicable slot offsets (minimum K0) of a PDSCH for each downlink BWP, and independently configure one or two minimum applicable slot offsets (minimum K2) of a PUSCH for each uplink BWP. However, at a same time, the terminal device has only one activated downlink BWP on one downlink carrier, and has only one activated uplink BWP on one uplink carrier. The network device may indicate, to the terminal device by using DCI, a valid minimum K0 of the downlink BWP or a valid minimum K2 of the uplink BWP, and may further indicate, by using DCI, the terminal device to switch the activated downlink BWP or uplink BWP. In an existing technical solution, only one of the valid minimum K0 of the downlink BWP of the terminal device or the valid minimum K2 of the uplink BWP of the terminal device is indicated, but the valid minimum K0 of the downlink BWP of the terminal device and the valid minimum K2 of the uplink BWP of the terminal device cannot be simultaneously determined. Therefore, a solution in which the minimum K0 and the minimum K2 can be jointly indicated is required, so that the valid minimum K0 of the downlink BWP of the terminal device and the valid minimum K2 of the uplink BWP of the terminal device are simultaneously determined.

## SUMMARY

This application provides a communication method and a communications apparatus, to resolve a problem in the prior art that only one of a valid minimum K0 of a downlink BWP of a terminal device or a valid minimum K2 of an uplink BWP of a terminal device is indicated, but the valid minimum K0 of the downlink BWP of the terminal device and the valid minimum K2 of the uplink BWP of the terminal device cannot be simultaneously determined.

According to a first aspect, an embodiment of this application provides a communication method. The method includes: A network device sends downlink control information to a terminal device. The downlink control information includes indication information. The indication information indicates one of at least one minimum K0 configured for a downlink BWP of the terminal device, or the indication information indicates one of at least one minimum K2 configured for an uplink BWP of the terminal device. At least one minimum K0 is configured for at least one downlink BWP of the terminal device, at least one minimum K2 is configured for at least one uplink BWP of the terminal device, and there is a correspondence between the minimum K0 configured for the downlink BWP and the minimum K2 configured for the uplink BWP.

The communication method described in this embodiment of this application and implemented by the network device may alternatively be implemented by a component of the network device, for example, implemented by a processing chip or a circuit in the network device. According to the foregoing method, there is a correspondence between the minimum K0 configured for the downlink BWP and the minimum K2 configured for the uplink BWP. This resolves a problem in the prior art that only one of a valid minimum K0 of the downlink BWP of the terminal device or a valid minimum K2 of the uplink BWP of the terminal device is indicated, but the valid minimum K0 of the downlink BWP of the terminal device and the valid minimum K2 of the uplink BWP of the terminal device cannot be simultaneously determined. This also resolves a problem of how to determine the valid minimum K0 of the downlink BWP and the valid minimum K2 of the uplink BWP when the downlink BWP and the uplink BWP are not simultaneously switched.

In a possible design, the correspondence includes: The minimum K0 configured for the downlink BWP and the minimum K2 configured for the uplink BWP are in a one-to-one correspondence in ascending order of indexes.

In a possible design, when the downlink control information does not indicate the terminal device to switch a currently activated downlink BWP and uplink BWP, if the downlink control information is for scheduling downlink data, the indication information indicates one of at least one minimum K0 configured for the currently activated downlink BWP of the terminal device; and if the downlink control information is for scheduling uplink data, the indication information indicates one of at least one minimum K2 configured for the currently activated uplink BWP of the terminal device; when the downlink control information indicates the terminal device to switch an activated downlink BWP from the currently activated downlink BWP to a to-be-activated downlink BWP, the indication information indicates one of at least one minimum K0 configured for the to-be-activated downlink BWP; and when the downlink control information indicates the terminal device to switch an activated uplink BWP from the currently activated uplink BWP to a to-be-activated uplink BWP, the indication information indicates one of at least one minimum K2 configured for the to-be-activated uplink BWP. In the foregoing design, scenarios in which the indication information indicates a valid minimum K0 of the downlink BWP and a valid minimum K2 of the uplink BWP are enriched, and an application scope of the communication method is extended.

In a possible design, the method further includes: When the indication information indicates one of the at least one minimum K0 configured for the downlink BWP of the terminal device, the network device determines that the minimum K0 indicated by the indication information is a valid minimum K0 of the downlink BWP of the terminal device, and determines that a minimum K2 that is in the at least one minimum K2 configured for the uplink BWP of the terminal device and that corresponds to the valid minimum K0 is a valid minimum K2 of the uplink BWP; or when the indication information indicates one of the at least one minimum K2 configured for the uplink BWP of the terminal device, the network device determines that the minimum K2 indicated by the indication information is a valid minimum K2 of the uplink BWP of the terminal device, and determines that a minimum K0 that is in the at least one minimum K0 configured for the downlink BWP of the terminal device and that corresponds to the valid minimum K2 is a valid minimum K0 of the downlink BWP. In the foregoing design, a manner in which the network device determines, based on the DCI, the valid minimum K0 of the downlink BWP of the terminal device and the valid minimum K2 of the uplink BWP of the terminal device is limited, so that the network device accurately learns of the valid minimum K0 of the downlink BWP of the terminal device and the valid minimum K2 of the uplink BWP of the terminal device.

In a possible design, before the network device sends the downlink control information to the terminal device, the method further includes: The network device sends configuration information to the terminal device. The configuration information includes at least one minimum K0 configured for at least one downlink BWP of the terminal device and at least one minimum K2 configured for at least one uplink BWP of the terminal device. According to the foregoing design, the terminal device learns of information about the at least one minimum K0 configured for the at least one downlink BWP of the terminal device and information about the at least one minimum K2 configured for the at least one uplink BWP of the terminal device.

According to a second aspect, an embodiment of this application provides a communication method. The method includes: A network device sends downlink control information to a terminal device. The downlink control information includes indication information. The indication information indicates one of at least one combination of a minimum K0 and a minimum K2 that is configured for a downlink BWP or an uplink BWP of the terminal device. At least one combination of a minimum K0 and a minimum K2 is configured for at least one downlink BWP of the terminal device, and/or at least one combination of a minimum K0 and a minimum K2 is configured for at least one uplink BWP of the terminal device.

The communication method described in this embodiment of this application and implemented by the network device may alternatively be implemented by a component of the network device, for example, implemented by a processing chip or a circuit in the network device. According to the foregoing method, a combination of a minimum K0 and a minimum K2 is configured for the downlink BWP of the terminal device, and/or a combination of a minimum K0 and a minimum K2 is configured for the uplink BWP of the terminal device, and the indication information indicates the combination of the minimum K0 and the minimum K2, so that a valid minimum K0 of the downlink BWP and a valid minimum K2 of the uplink BWP are indicated. This resolves a problem in the prior art that only one of the valid minimum K0 of the downlink BWP of the terminal device or the valid minimum K2 of the uplink BWP of the terminal device is indicated, but the valid minimum K0 of the downlink BWP of the terminal device and the valid minimum K2 of the uplink BWP of the terminal device cannot be simultaneously determined. This also resolves a problem of how to determine the valid minimum K0 of the downlink BWP and the valid minimum K2 of the uplink BWP when the downlink BWP and the uplink BWP are not simultaneously switched.

In a possible design, the at least one combination of the minimum K0 and the minimum K2 is configured for the at least one downlink BWP of the terminal device; when the downlink control information does not indicate the terminal device to switch a currently activated downlink BWP, the indication information indicates one of at least one combination of a minimum K0 and a minimum K2 that is configured for the currently activated downlink BWP of the terminal device; and when the downlink control information indicates the terminal device to switch an activated downlink BWP from the currently activated downlink BWP to a to-be-activated downlink BWP, the indication information indicates one of at least one combination of a minimum K0 and a minimum K2 that is configured for the to-be-activated downlink BWP. In the foregoing design, scenarios in which the indication information indicates a valid minimum K0 of the downlink BWP and a valid minimum K2 of the uplink BWP when the at least one combination of the minimum K0 and the minimum K2 is configured for the at least one downlink BWP of the terminal device are enriched, and an application scope of the communication method is extended.

In a possible design, the at least one combination of the minimum K0 and the minimum K2 is configured for the at least one uplink BWP of the terminal device; when the downlink control information does not indicate the terminal device to switch a currently activated uplink BWP, the indication information indicates one of at least one combination of a minimum K0 and a minimum K2 that is configured for the currently activated uplink BWP of the terminal device; and when the downlink control information indicates the terminal device to switch an activated uplink BWP from the currently activated uplink BWP to a to-be-activated uplink BWP, the indication information indicates one of at least one combination of a minimum K0 and a minimum K2 that is configured for the to-be-activated uplink BWP. In the foregoing design, scenarios in which the indication information indicates a valid minimum K0 of the downlink BWP and a valid minimum K2 of the uplink BWP when the at least one combination of the minimum K0 and the minimum K2 is configured for the at least one uplink BWP of the terminal device are enriched, and an application scope of the communication method is extended.

In a possible design, the at least one combination of the minimum K0 and the minimum K2 is configured for the at least one downlink BWP of the terminal device, and the at least one combination of the minimum K0 and the minimum K2 is configured for the at least one uplink BWP of the terminal device. When the downlink control information does not indicate the terminal device to switch a currently activated downlink BWP and uplink BWP, if the downlink control information is for scheduling downlink data, the indication information indicates one of at least one combination of a minimum K0 and a minimum K2 that is configured for the currently activated downlink BWP of the terminal device; and if the downlink control information is for scheduling uplink data, the indication information indicates one of at least one combination of a minimum K0 and a minimum K2 that is configured for the currently activated uplink BWP of the terminal device. When the downlink control information indicates the terminal device to switch an activated downlink BWP from the currently activated downlink BWP to a to-be-activated downlink BWP, the indication information indicates one of at least one combination of a minimum K0 and a minimum K2 that is configured for the to-be-activated downlink BWP. When the downlink control information indicates the terminal device to switch an activated uplink BWP from the currently activated uplink BWP to a to-be-activated uplink BWP, the indication information indicates one of at least one combination of a minimum K0 and a minimum K2 that is configured for the to-be-activated uplink BWP. In the foregoing design, scenarios in which the indication information indicates a valid minimum K0 of the downlink BWP and a valid minimum K2 of the uplink BWP when the at least one combination of the minimum K0 and the minimum K2 is configured for the at least one downlink BWP of the terminal device and the at least one combination of the minimum K0 and the minimum K2 is configured for the at least one uplink BWP of the terminal device are enriched, and an application scope of the communication method is extended.

In a possible design, after the network device sends the downlink control information to the terminal device, the method further includes: When the indication information indicates one of the at least one combination of the minimum K0 and the minimum K2 that is configured for the downlink BWP of the terminal device, the network device determines that the minimum K0 indicated by the indication information is a valid minimum K0 of the downlink BWP of the terminal device, and determines that a minimum K2 that is the same as or similar to the minimum K2 indicated by the indication information and that is in the at least one combination of the minimum K0 and the minimum K2 that is configured for the uplink BWP of the terminal device is a valid minimum K2 of the uplink BWP of the terminal device; or when the indication information indicates one of the at least one combination of the minimum K2 and the minimum K0 that is configured for the uplink BWP of the terminal device, the network device determines that the minimum K2 indicated by the indication information is a valid minimum K2 of the uplink BWP of the terminal device, and determines that a minimum K0 that is the same as or similar to the minimum K0 indicated by the indication information and that is in the at least one combination of the minimum K0 and the minimum K2 that is configured for the downlink BWP of the terminal device is a valid minimum K0 of the downlink BWP of the terminal device. In the foregoing design, a manner in which the network device determines, based on the DCI, the valid minimum K0 of the downlink BWP of the terminal device and the valid minimum K2 of the uplink BWP of the terminal device is limited, so that the network device accurately learns of the valid minimum K0 of the downlink BWP of the terminal device and the valid minimum K2 of the uplink BWP of the terminal device.

In a possible design, before the network device sends the downlink control information to the terminal device, the method further includes: The network device sends configuration information to the terminal device. The configuration information includes the at least one combination of the minimum K0 and the minimum K2 that is configured for the at least one downlink BWP of the terminal device and/or the at least one combination of the minimum K0 and minimum K2 that is configured for the at least one uplink BWP of the terminal device. According to the foregoing design, the terminal device learns of the at least one combination of the minimum K0 and the minimum K2 that is configured for the at least one downlink BWP of the terminal device and/or the at least one combination of the minimum K0 and the minimum K2 that is configured for the at least one uplink BWP of the terminal device.

According to a third aspect, an embodiment of this application provides a communication method. The method includes: A network device sends downlink control information to a terminal device. The downlink control information includes indication information. The indication information indicates one of at least one combination of a minimum K0 and a minimum K2 that is configured for a pair of a downlink BWP and an uplink BWP of the terminal device. At least one combination of a minimum K0 and a minimum K2 is configured for at least one pair of a downlink BWP and an uplink BWP of the terminal device.

The communication method described in this embodiment of this application and implemented by the network device may alternatively be implemented by a component of the network device, for example, implemented by a processing chip or a circuit in the network device. According to the foregoing method, a combination of a minimum K0 and a minimum K2 is configured for the pair of the downlink BWP and the uplink BWP of the terminal device, and the indication information indicates the combination of the minimum K0 and the minimum K2, so that a valid minimum K0 of the downlink BWP and a valid minimum K2 of the uplink BWP are indicated. This resolves a problem in the prior art that only one of the valid minimum K0 of the downlink BWP of the terminal device or the valid minimum K2 of the uplink BWP of the terminal device is indicated, but the valid minimum K0 of the downlink BWP of the terminal device and the valid minimum K2 of the uplink BWP of the terminal device cannot be simultaneously determined. This also resolves a problem of how to determine the valid minimum K0 of the downlink BWP and the valid minimum K2 of the uplink BWP when the downlink BWP and the uplink BWP are not simultaneously switched.

In a possible design, when the downlink control information does not indicate the terminal device to switch a currently activated uplink BWP and downlink BWP, the indication information indicates one of at least one combination of a minimum K0 and a minimum K2 that is configured for a pair of the currently activated downlink BWP and uplink BWP of the terminal device; when the downlink control information indicates the terminal device to switch an activated downlink BWP from the currently activated downlink BWP to a to-be-activated downlink BWP, the indication information indicates one of at least one combination of a minimum K0 and a minimum K2 that is configured for a pair of the to-be-activated downlink BWP and the currently activated uplink BWP of the terminal device; and when the downlink control information indicates the terminal device to switch an activated uplink BWP from the currently activated uplink BWP to a to-be-activated uplink BWP, the indication information indicates one of at least one combination of a minimum K0 and a minimum K2 that is configured for a pair of the currently activated downlink BWP and the to-be-activated uplink BWP of the terminal device. In the foregoing design, scenarios in which the indication information indicates a valid minimum K0 of the downlink BWP and a valid minimum K2 of the uplink BWP are enriched, and an application scope of the communication method is extended.

In a possible design, before the network device sends the downlink control information to the terminal device, the method further includes: The network device sends configuration information to the terminal device. The configuration information includes the at least one combination of the minimum K0 and the minimum K2 that is configured for the at least one pair of the downlink BWP and the uplink BWP of the terminal device. According to the foregoing design, the terminal device learns of the at least one combination of the minimum K0 and the minimum K2 that is configured for the at least one pair of the downlink BWP and the uplink BWP of the terminal device.

According to a fourth aspect, an embodiment of this application provides a communication method. The method includes: A terminal device receives downlink control information from a network device. The downlink control information includes indication information. The indication information indicates one of at least one minimum K0 configured for a downlink BWP of the terminal device, or the indication information indicates one of at least one minimum K2 configured for an uplink BWP of the terminal device. At least one minimum K0 is configured for at least one downlink BWP of the terminal device, at least one minimum K2 is configured for at least one uplink BWP of the terminal device, and there is a correspondence between the minimum K0 configured for the downlink BWP and the minimum K2 configured for the uplink BWP. The terminal device determines a valid minimum K0 of the downlink BWP and a valid minimum K2 of the uplink BWP based on the downlink control information.

In a possible design, the correspondence includes: The minimum K0 configured for the downlink BWP and the minimum K2 configured for the uplink BWP are in a one-to-one correspondence in ascending order of indexes.

In a possible design, when the downlink control information does not indicate the terminal device to switch a currently activated downlink BWP and uplink BWP, if the downlink control information is for scheduling downlink data, the indication information indicates one of at least one minimum K0 configured for the currently activated downlink BWP of the terminal device; and if the downlink control information is for scheduling uplink data, the indication information indicates one of at least one minimum K2 configured for the currently activated uplink BWP of the terminal device; when the downlink control information indicates the terminal device to switch an activated downlink BWP from the currently activated downlink BWP to a to-be-activated downlink BWP, the indication information indicates one of at least one minimum K0 configured for the to-be-activated downlink BWP; and when the downlink control information indicates the terminal device to switch an activated uplink BWP from the currently activated uplink BWP to a to-be-activated uplink BWP, the indication information indicates one of at least one minimum K2 configured for the to-be-activated uplink BWP.

In a possible design, that the terminal device determines a valid minimum K0 of the downlink BWP and a valid minimum K2 of the uplink BWP based on the downlink control information includes: When the indication information indicates one of the at least one minimum K0 configured for the downlink BWP of the terminal device, the terminal device determines that the minimum K0 indicated by the indication information is the valid minimum K0 of the downlink BWP of the terminal device, and determines that a minimum K2 that is in the at least one minimum K2 configured for the uplink BWP of the terminal device and that corresponds to the valid minimum K0 is the valid minimum K2 of the uplink BWP; or when the indication information indicates one of the at least one minimum K2 configured for the uplink BWP of the terminal device, the terminal device determines that the minimum K2 indicated by the indication information is the valid minimum K2 of the uplink BWP of the terminal device, and determines that a minimum K0 that is in the at least one minimum K0 configured for the downlink BWP of the terminal device and that corresponds to the valid minimum K2 is the valid minimum K0 of the downlink BWP.

According to a fifth aspect, an embodiment of this application provides a communication method. The method includes: A terminal device receives downlink control information from a network device. The downlink control information includes indication information. The indication information indicates one of at least one combination of a minimum K0 and a minimum K2 that is configured for a downlink BWP or an uplink BWP of the terminal device. At least one combination of a minimum K0 and a minimum K2 is configured for at least one downlink BWP of the terminal device, and/or at least one combination of a minimum K0 and a minimum K2 is configured for at least one uplink BWP of the terminal device. The terminal device determines a valid minimum K0 of the downlink BWP and a valid minimum K2 of the uplink BWP based on the downlink control information.

In a possible design, the at least one combination of the minimum K0 and the minimum K2 is configured for the at least one downlink BWP of the terminal device; when the downlink control information does not indicate the terminal device to switch a currently activated downlink BWP, the indication information indicates one of at least one combination of a minimum K0 and a minimum K2 that is configured for the currently activated downlink BWP of the terminal device; and when the downlink control information indicates the terminal device to switch an activated downlink BWP from the currently activated downlink BWP to a to-be-activated downlink BWP, the indication information indicates one of at least one combination of a minimum K0 and a minimum K2 that is configured for the to-be-activated downlink BWP.

In a possible design, the at least one combination of the minimum K0 and the minimum K2 is configured for the at least one uplink BWP of the terminal device; when the downlink control information does not indicate the terminal device to switch a currently activated uplink BWP, the indication information indicates one of at least one combination of a minimum K0 and a minimum K2 that is configured for the currently activated uplink BWP of the terminal device; and when the downlink control information indicates the terminal device to switch an activated uplink BWP from the currently activated uplink BWP to a to-be-activated uplink BWP, the indication information indicates one of at least one combination of a minimum K0 and a minimum K2 that is configured for the to-be-activated uplink BWP.

In a possible design, the at least one combination of the minimum K0 and the minimum K2 is configured for the at least one downlink BWP of the terminal device, and the at least one combination of the minimum K0 and the minimum K2 is configured for the at least one uplink BWP of the terminal device. When the downlink control information does not indicate the terminal device to switch a currently activated downlink BWP and uplink BWP, if the downlink control information is for scheduling downlink data, the indication information indicates one of at least one combination of a minimum K0 and a minimum K2 that is configured for the currently activated downlink BWP of the terminal device; and if the downlink control information is for scheduling uplink data, the indication information indicates one of at least one combination of a minimum K0 and a minimum K2 that is configured for the currently activated uplink BWP of the terminal device. When the downlink control information indicates the terminal device to switch an activated downlink BWP from the currently activated downlink BWP to a to-be-activated downlink BWP, the indication information indicates one of at least one combination of a minimum K0 and a minimum K2 that is configured for the to-be-activated downlink BWP. When the downlink control information indicates the terminal device to switch an activated uplink BWP from the currently activated uplink BWP to a to-be-activated uplink BWP, the indication information indicates one of at least one combination of a minimum K0 and a minimum K2 that is configured for the to-be-activated uplink BWP.

In a possible design, that the terminal device determines a valid minimum K0 of the downlink BWP and a valid minimum K2 of the uplink BWP based on the downlink control information includes: When the indication information indicates one of the at least one combination of the minimum K0 and the minimum K2 that is configured for the downlink BWP of the terminal device, the terminal device determines that the minimum K0 indicated by the indication information is the valid minimum K0 of the downlink BWP of the terminal device, and determines that a minimum K2 that is the same as or similar to the minimum K2 indicated by the indication information and that is in the at least one combination of the minimum K0 and the minimum K2 that is configured for the uplink BWP of the terminal device is the valid minimum K2 of the uplink BWP of the terminal device; or when the indication information indicates one of the at least one combination of the minimum K2 and the minimum K0 that is configured for the uplink BWP of the terminal device, the terminal device determines that the minimum K2 indicated by the indication information is the valid minimum K2 of the uplink BWP of the terminal device, and determines that a minimum K0 that is the same as or similar to the minimum K0 indicated by the indication information and that is in the at least one combination of the minimum K0 and the minimum K2 that is configured for the downlink BWP of the terminal device is the valid minimum K0 of the downlink BWP of the terminal device.

According to a sixth aspect, an embodiment of this application provides a communication method. The method includes: A terminal device receives downlink control information from a network device. The downlink control information includes indication information. The indication information indicates one of at least one combination of a minimum K0 and a minimum K2 that is configured for a pair of a downlink BWP and an uplink BWP of the terminal device. At least one combination of a minimum K0 and a minimum K2 is configured for at least one pair of a downlink BWP and an uplink BWP of the terminal device. The terminal device determines a valid minimum K0 of the downlink BWP and a valid minimum K2 of the uplink BWP based on the downlink control information.

In a possible design, when the downlink control information does not indicate the terminal device to switch a currently activated uplink BWP and downlink BWP, the indication information indicates one of at least one combination of a minimum K0 and a minimum K2 that is configured for a pair of the currently activated downlink BWP and uplink BWP of the terminal device; when the downlink control information indicates the terminal device to switch an activated downlink BWP from the currently activated downlink BWP to a to-be-activated downlink BWP, the indication information indicates one of at least one combination of a minimum K0 and a minimum K2 that is configured for a pair of the to-be-activated downlink BWP and the currently activated uplink BWP of the terminal device; and when the downlink control information indicates the terminal device to switch an activated uplink BWP from the currently activated uplink BWP to a to-be-activated uplink BWP, the indication information indicates one of at least one combination of a minimum K0 and a minimum K2 that is configured for a pair of the currently activated downlink BWP and the to-be-activated uplink BWP of the terminal device.

According to a seventh aspect, an embodiment of this application provides a communications apparatus. The apparatus has a function of implementing the method according to any one of the first aspect or the possible designs of the first aspect, the method according to any one of the second aspect or the possible designs of the second aspect, or the method according to any one of the third aspect or the possible designs of the third aspect. The function may be implemented by hardware, or may be implemented by hardware executing corresponding software. The hardware or the software includes one or more modules corresponding to the function, for example, a transceiver unit and a processing unit.

In a possible design, the apparatus may be a chip or an integrated circuit.

In a possible design, the apparatus includes a memory and a processor. The memory is configured to store a program executed by the processor. When the program is executed by the processor, the apparatus may perform the method according to any one of the first aspect or the possible designs of the first aspect, the method according to any one of the second aspect or the possible designs of the second aspect, or the method according to any one of the third aspect or the possible designs of the third aspect.

In a possible design, the apparatus may be a network device.

According to an eighth aspect, an embodiment of this application provides a communications apparatus. The apparatus has a function of implementing the method according to any one of the fourth aspect or the possible designs of the fourth aspect, the method according to any one of the fifth aspect or the possible designs of the fifth aspect, or the method according to any one of the sixth aspect or the possible designs of the sixth aspect. The function may be implemented by hardware, or may be implemented by hardware executing corresponding software. The hardware or the software includes one or more modules corresponding to the function, for example, a transceiver unit and a processing unit.

In a possible design, the apparatus may be a chip or an integrated circuit.

In a possible design, the apparatus includes a memory and a processor. The memory is configured to store a program executed by the processor. When the program is executed by the processor, the apparatus may perform the method according to any one of the fourth aspect or the possible designs of the fourth aspect, the method according to any one of the fifth aspect or the possible designs of the fifth aspect, or the method according to any one of the sixth aspect or the possible designs of the sixth aspect.

In a possible design, the apparatus may be a terminal device.

According to a ninth aspect, an embodiment of this application provides a computer-readable storage medium. The storage medium stores a computer instruction. When the computer instruction is executed, the method according to any one of the first aspect or the possible designs of the first aspect, the method according to any one of the second aspect or the possible designs of the second aspect, the method according to any one of the third aspect or the possible designs of the third aspect, the method according to any one of the fourth aspect or the possible designs of the fourth aspect, the method according to any one of the fifth aspect or the possible designs of the fifth aspect, or the method according to any one of the sixth aspect or the possible designs of the sixth aspect may be implemented.

According to a tenth aspect, an embodiment of this application further provides a computer program product. The computer program product includes a computer program or an instruction. When the computer program or the instruction is executed, the method according to any one of the first aspect or the possible designs of the first aspect, the method according to any one of the second aspect or the possible designs of the second aspect, the method according to any one of the third aspect or the possible designs of the third aspect, the method according to any one of the fourth aspect or the possible designs of the fourth aspect, the method according to any one of the fifth aspect or the possible designs of the fifth aspect, or the method according to any one of the sixth aspect or the possible designs of the sixth aspect may be implemented.

According to an eleventh aspect, an embodiment of this application further provides a chip. The chip is coupled to a memory, and is configured to read and execute a program instruction stored in the memory, to implement the method according to any one of the first aspect or the possible designs of the first aspect, the method according to any one of the second aspect or the possible designs of the second aspect, the method according to any one of the third aspect or the possible designs of the third aspect, the method according to any one of the fourth aspect or the possible designs of the fourth aspect, the method according to any one of the fifth aspect or the possible designs of the fifth aspect, or the method according to any one of the sixth aspect or the possible designs of the sixth aspect.

**BRIEF DESCRIPTION OF DRAWINGS**

FIG. 1 is a schematic diagram of comparison between same-slot scheduling and cross-slot scheduling according to an embodiment of this application;
FIG. 2 is a schematic architecture diagram of a communications system according to an embodiment of this application;
FIG. 3 is a schematic diagram of BWP switching according to an embodiment of this application;
FIG. 4 is a first schematic diagram of a communication process according to an embodiment of this application;
FIG. 5 is a second schematic diagram of a communication process according to an embodiment of this application;
FIG. 6 is a third schematic diagram of a communication process according to an embodiment of this application;
FIG. 7 is a fourth schematic diagram of a communication process according to an embodiment of this application;
FIG. 8 is a fifth schematic diagram of a communication process according to an embodiment of this application;
FIG. 9 is a first schematic block diagram of a network device according to an embodiment of this application;
FIG. 10 is a second schematic block diagram of a network device according to an embodiment of this application;
FIG. 11 is a first schematic block diagram of a terminal device according to an embodiment of this application;
FIG. 12 is a second schematic block diagram of a terminal device according to an embodiment of this application;
FIG. 13 is a schematic structural diagram of a terminal device according to an embodiment of this application; and
FIG. 14 is a schematic structural diagram of a network device according to an embodiment of this application.

**DESCRIPTION OF EMBODIMENTS**

The following describes in detail embodiments of this application with reference to the accompanying drawings.

Technical solutions in the embodiments of this application may be applied to various communications systems such as a 5G system, an NR system, and a long term evolution-advanced (long term evolution-advanced, LTE-A) system, and may further be extended to a wireless fidelity (wireless fidelity, Wi-Fi) system, a worldwide interoperability for microwave access (worldwide interoperability for microwave access, wimax) system, a cellular system related to 3GPP and the like, and a future communications system such as a 6G system. Specifically, an NR system is used as an example. An architecture of a communications system used in the embodiments of this application may be shown in FIG. 2, and includes a terminal device and a network device. Downlink communication is performed between the terminal device and the network device. It should be noted that quantities of terminal devices and network devices in the communications system shown in FIG. 2 are not limited in this embodiment.

Before the embodiments of this application are described, some terms in this application are first described, to help a person skilled in the art have a better understanding.

(1) A terminal device includes a device that provides a user with voice and/or data connectivity, for example, may include a handheld device having a wireless connection function, or a processing device connected to a wireless modem. The terminal device may communicate with a core network through a radio access network (radio access network, RAN), and exchange voice and/or data with the RAN. The terminal device may include user equipment (user equipment, UE), a wireless terminal device, a mobile terminal device, a device-to-device (device-to-device, D2D) terminal device, a V2X terminal device, a machine-to-machine/machine-type communications (machine-to-machine/machine-type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, a portable, pocket-sized, handheld, or computer built-in mobile apparatus, or the like. For example, the terminal device is a device such as a personal communications service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capability, or a device with a limited computing capability. For example, the terminal device may be an information sensing device, for example, a barcode, radio frequency identification (Radio Frequency Identification, RFID), a sensor, a global positioning system (Global Positioning System, GPS), or a laser scanner.

By way of example, but not limitation, the terminal device in the embodiments of this application may alternatively be a wearable device. The wearable device may also be referred to as a wearable intelligent device, an intelligent wearable device, or the like, and is a generic term for wearable devices that are developed by applying wearable technologies to intelligently design daily wear, such as glasses, gloves, watches, clothes, and shoes. The wearable device is a portable device that is directly worn on a body or integrated into clothes or an accessory of the user. The wearable device is not only a hardware device, but also implements a powerful function through software support, data exchange, and cloud interaction. In a broad sense, the wearable intelligent device includes full-featured and large-sized devices that can implement all or some functions without depending on smartphones, for example, smart watches or smart glasses, and devices that focus on only one type of application function and need to work with other devices such as smartphones, for example, various smart bands, smart helmets, or smart jewelry for monitoring physical signs.

However, if the various terminal devices described above are located on a vehicle (for example, placed in the vehicle or installed in the vehicle), the terminal devices may be considered as in-vehicle terminal devices. For example, the in-vehicle terminal devices are also referred to as on-board units (on-board unit, OBU).

In the embodiments of this application, the terminal device may further include a relay (relay). Alternatively, it may be understood that any device that can perform data communication with a base station may be considered as a terminal device.

(2) A network device may be a device that is in an access network and that communicates with a wireless terminal device over an air interface through one or more cells. The network device may be a node in a radio access network, and may also be referred to as a base station or a radio access network (radio access network, RAN) node (or device). Currently, for example, some network devices are a gNB, a transmission reception point (transmission reception point, TRP), an evolved NodeB (evolved Node B, eNB), a radio network controller (radio network controller, RNC), a NodeB (Node B, NB), a base station controller (base station controller, BSC), a base transceiver station (base transceiver station, BTS), a home base station (for example, a home evolved NodeB or a home Node B, HNB), a baseband unit (base band unit, BBU), and a wireless fidelity (wireless fidelity, Wi-Fi) access point (access point, AP). In addition, in a network structure, the network device may include a centralized unit (centralized unit, CU) node and a distributed unit (distributed unit, DU) node. The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer.

(3) An existing cross-slot scheduling process mainly includes the following steps.

Step 1: A network device configures a time domain resource allocation list (time domain resource allocation list) of a PDSCH for a terminal device by using radio resource control (radio resource control, RRC) signaling. The time domain resource allocation list of the PDSCH includes a set of a slot offset (KO) between a PDCCH and the scheduled PDSCH, and a set of a start symbol and a length of the PDSCH in a slot in which the PDSCH is located. A value of K0 in the K0 set may be greater than or equal to 0, and one or more values may be configured for K0. For example, the K0 set may be configured as {0, 1, 2, 3, 4, 5, 6}. In this case, it is considered by default that minimum K0=0. To be specific, all values of K0 in the K0 set are valid. When the PDSCH is scheduled over the PDCCH, any value of K0 in the K0 set may be indicated, and there is no limitation. The network device also configures one or two minimum K0 values for the terminal device by using RRC signaling. Without loss of generality, if the network device configures only one minimum K0 value, the other minimum K0 value is considered as 0 by default. For ease of description, even if the network device configures only one minimum K0 value for the BWP, a description such as "the network device configures two minimum K0 values" or "two configured minimum K0 values" is still used in this application. In this case, the two configured minimum K0 values are 0 and a value configured for the minimum K0 by using the RRC signaling.

In addition, the network device further configures a time domain resource allocation list of a PUSCH for the terminal device by using RRC signaling. The time domain resource allocation list of the PUSCH includes a set of a slot offset (K2) between a PDCCH and the scheduled PUSCH, and a set of a start symbol and a length of the PUSCH in a slot in which the PUSCH is located. In this case, it is considered by default that minimum K2=0. To be specific, all values of K2 in the K2 set are valid. When the PUSCH is scheduled over the PDCCH, any value of K2 in the K2 set may be indicated, and there is no limitation. The network device also configures one or two minimum K2 values for the terminal device by using RRC signaling. Without loss of generality, if the network device configures only one minimum K2 value, the other minimum K2 value is 0 by default. For ease of description, even if the network device configures only one minimum K2 value for the BWP, "the network configures two minimum K2 values" or "two configured minimum K2 values" is still used in the descriptions of this application. In this case, the two configured minimum K2 values are 0 and a value configured for the minimum K2 by using the RRC signaling.

Step 2: If two minimum K0 values are configured in step 1, the network device indicates one of the minimum K0 values by sending DCI to the terminal device over the PDCCH. For example, the network device configures minimum K0=1 and 2 for the terminal device, and the network device indicates minimum K0=1 by sending DCI to the terminal device over the PDCCH. Both the network device and the terminal device consider that a K0 value less than the minimum K0 in the K0 set is invalid and cannot be used for scheduling. To be specific, if the network device indicates minimum K0=1, the K0 value cannot be less than 1 when the PDSCH is actually scheduled over the PDCCH. That is, the K0 value cannot be 0.

If only one minimum K0 value is configured in step 1, the minimum K0 is indicated in step 2 by using the DCI sent over the PDCCH. This indicates whether downlink data scheduling is limited by the configured minimum K0 value. For example, in step 1, the network device configures only minimum K0=1 for the terminal device. In this case, whether the downlink scheduling is constrained by minimum K0=1 is indicated in step 2. If the indication is that the downlink scheduling is not constrained, it is considered by default that minimum K0=0, and the values in the K0 set are all valid. If the indication is that the downlink scheduling is constrained, a K0 value should be greater than or equal to 1 during actual scheduling.

Similarly, the network device may also indicate one of two configured minimum K2 values by sending DCI to the terminal device over the PDCCH, or indicate whether uplink data scheduling is constrained by one configured minimum K2 value.

In the embodiments of this application, if only one value is configured for the minimum K0 or minimum K2, it is assumed that a minimum K0 or minimum K2 whose index is 0 in the minimum K0 set or minimum K2 set is 0. Therefore, in unified descriptions, the network device indicates one minimum K0 in the minimum K0 set or one minimum K2 in the minimum K2 set by sending the DCI to the terminal device over the PDCCH.

Step 3: The network device schedules the PDSCH for the terminal device over the PDCCH. The PDCCH indicates a slot offset value in the K0 set, and the slot offset value needs to be greater than or equal to the minimum K0. The terminal device periodically monitors the PDCCH. When minimum K0>0, the terminal device needs to only detect the PDCCH and does not need to buffer a possible PDSCH in the slot, so that processing time of the PDCCH can be relaxed, thereby reducing power consumption. If the terminal device detects that the PDCCH schedules the PDSCH, the terminal device receives the PDSCH in a slot of a corresponding K0 indicated by the PDCCH.

Similarly, for uplink data transmission, the network device schedules the PUSCH for the terminal device over the PDCCH. The PDCCH indicates a slot offset value in the K2 set, and the slot offset value needs to be greater than or equal to the minimum K2. When minimum K2>0, the terminal device needs to only detect the PDCCH, so that processing time of the PDCCH can be relaxed, thereby reducing power consumption. If the terminal device detects that the PDCCH schedules the PUSCH, the terminal device receives the PUSCH in a slot in which a corresponding K2 indicated by the PDCCH is located.

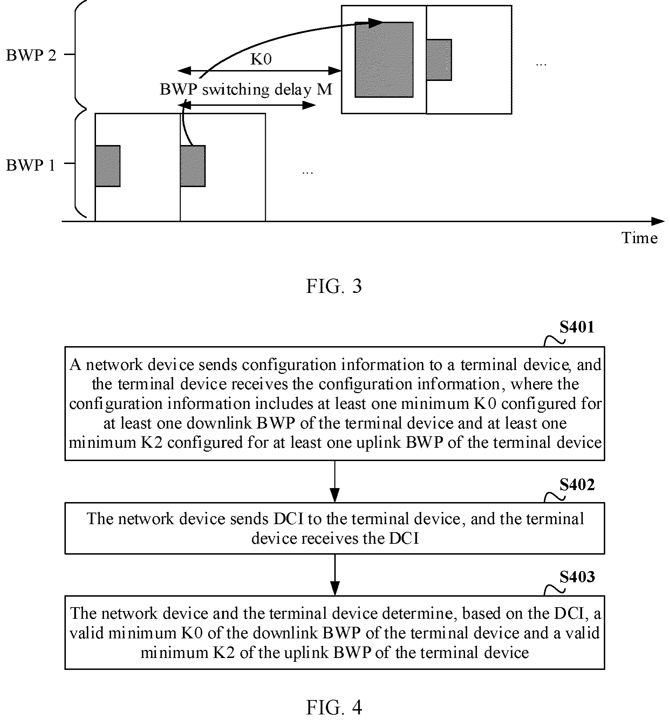

In addition, in a communications system, a plurality of downlink BWPs can be configured on each downlink carrier, and a plurality of uplink BWPs can be configured on each uplink carrier. A network device may configure, for a terminal device, a plurality of downlink BWPs on each downlink carrier and a plurality of uplink BWPs on each uplink carrier. However, at a same time, the terminal device has only one activated downlink BWP on one downlink carrier, and has only one activated uplink BWP on one uplink carrier. The network device may dynamically switch the activated downlink BWP or uplink BWP over a PDCCH. A downlink BWP is used as an example. As shown in FIG. 3, a network device has configured two BWPs, and a BWP 1 is in an activated state currently. If terminal device monitors a PDCCH on the BWP 1, and detects, in a second slot, that a BWP indicator (indicator) field of DCI indicates a BWP 2, the terminal device switches to the BWP 2. In this case, an activated BWP is switched from the BWP 1 to the BWP 2. After the BWP 2 is activated, the terminal device monitors the PDCCH and receives a PDSCH on the BWP 2.

When the network device configures, for the terminal device, the plurality of downlink BWPs on each downlink carrier and the plurality of uplink BWPs on each uplink carrier, in step 1, a K0 set of each downlink BWP and a K2 set of each uplink BWP are independently configured, and a minimum K0 value of each downlink BWP and a minimum K2 value of each uplink BWP are also independently configured. Different uplink BWPs may have different minimum K0 values, or different downlink BWPs may have different minimum K2 values. For example, two minimum K0 values $\{minK0_{DLBWP\ \#i,\ 0}, minK0_{DLBWP\ \#i,\ 1}\}$ are configured for a downlink BWP #i whose ID is i, and two minimum K2 values $\{minK2_{ULBWP\ \#x,\ 0}, minK2_{ULBWP\ \#x,\ 1}\}$ are also configured for an uplink BWP #x whose ID is x.

Step (2) is performed to indicate that a currently valid minimum K0 is $minK0_{DLBWP\ \#i,\ 0}$, and a currently valid minimum K2 is $minK2_{ULBWP\ \#x,\ 0}$. When a downlink BWP is switched from the downlink BWP #i to a downlink BWP #j, a valid minimum K0 of the newly activated downlink BWP #j is denoted as $minK0_{DLBWP\#j,\ 0}$. In this case, the uplink BWP #x is not switched in a frequency division duplexing (frequency division duplexing, FDD) system. However, from a perspective of reducing power consumption of the terminal device, there is an association between the valid minimum K0 of the downlink BWP of the terminal device and the valid minimum K2 of the uplink BWP of the terminal device. In this case, how to update the minimum K2 needs to be resolved.

This application is intended to resolve a problem in the prior art that only one of a valid minimum K0 of a downlink BWP of a terminal device or a valid minimum K2 of an uplink BWP of a terminal device is indicated, but the valid minimum K0 of the downlink BWP of the terminal device and the valid minimum K2 of the uplink BWP of the terminal device cannot be simultaneously determined.

The following describes in detail the embodiments of this application with reference to the accompanying drawings. In addition, it should be understood that the term "for example" in the embodiments of this application is used to represent giving an example, an illustration, or a description. Any embodiment or design scheme described as an "example" in this application should not be explained as being more preferred or having more advantages than another embodiment or design scheme. Exactly, the term "for example" is used to present a concept in a specific manner.

The terms "include/comprise" and "have" in the embodiments, claims, and accompanying drawings of this application are not exclusive. For example, a process, method, system, product, or device including a series of steps or modules is not limited to the enumerated steps or modules, and may further include a step or module that is not enumerated. The terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. It should be understood that in the embodiments of this application, "B corresponding to A" indicates that B is associated with A, and B may be determined based on A. However, it should be further understood that determining B based on A does not mean that B is determined based on only A. B may alternatively be determined based on A and/or other information. In addition, unless otherwise stated, ordinal numbers such as "first" and "second" in the embodiments of this application are used to distinguish between a plurality of objects, but are not intended to limit a sequence, a time sequence, priorities, or importance of the plurality of objects. In addition, the terms "include" and "have" in the embodiments, claims, and accompanying drawings of this application are not exclusive. For example, a process, method, system, product, or device including a series of steps or modules is not limited to the enumerated steps or modules, and may further include a step or module that is not enumerated. "A plurality of" in this application means two or more.

In addition, in the embodiments of this application, information (information), a signal (signal), a message (message), and a channel (channel) may be interchangeably used sometimes. It should be noted that meanings expressed by the terms are consistent when differences are not emphasized. "Of (of)", "corresponding (corresponding or relevant)", and "corresponding (corresponding)" may be interchangeably used sometimes. It should be noted that meanings expressed by the terms are consistent when differences are not emphasized.

**Embodiment 1**

FIG. 4 is a schematic diagram of a communication process according to an embodiment of this application. The process includes the following steps.

S401: A network device sends configuration information to a terminal device, and the terminal device receives the configuration information, where the configuration information includes at least one minimum K0 configured for at least one downlink BWP of the terminal device and at least one minimum K2 configured for at least one uplink BWP of the terminal device.

In this embodiment of this application, there is a correspondence between the minimum K0 configured by the network device for the downlink BWP of the terminal device and the minimum K2 configured by the network device for the uplink BWP of the terminal device.

In a possible implementation, the correspondence is that the minimum K0 configured for the downlink BWP and the minimum K2 configured for the uplink BWP are in a one-to-one correspondence in ascending order of indexes. For example, a minimum K0 having an index 0 corresponds to a minimum K2 having an index 0, and a minimum K0 having an index 1 corresponds to a minimum K2 having an index 1.

For example, the network device configures two minimum K0 values $\{minK0_{DLBWP\ \#i,\ 0}, minK0_{DLBWP\ \#i,\ 1}\}$ for a downlink BWP #i of the terminal device, and configures two minimum K0 values $\{minK0_{DLBWP\ \#j,\ 0}, minK0_{DLBWP\ \#j,\ 1}\}$ for a downlink BWP #j; and further configures two minimum K2 values $\{minK2_{ULBWP\ \#x,\ 0}, minK2_{ULBWP\ \#x,\ 1}\}$ for an uplink BWP #x, and configures two minimum K2 values $\{minK2_{ULBWP\ \#y,\ 0}, minK2_{ULBWP\ \#y,\ 1}\}$ for an uplink BWP #y, where i, j, k, and y in #i, #j, #x, and #y represent IDs of the uplink/downlink BWPs, and 0 and 1 in $minK0_{DLBWP\ \#i,\ 0}$, $minK0_{DLBWP\ \#i,\ 1}$, and the like represent indexes of $minK0_{DLBWP\ \#i,\ 0}$, $minK0_{DLBWP\ \#i,\ 1}$, and the like. The downlink BWP #i and the uplink BWP #x are used as an example. In this case, $minK0_{DLBWP\ \#i,\ 0}$ having an index 0 corresponds to $minK2_{ULBWP\ \#x,\ 0}$ having an index 0, and $minK0_{DLBWP\ \#i,\ 1}$ having an index 1 corresponds to $minK2_{ULBWP\ \#x,\ 1}$ having an index 1. In addition, when the network device configures only one minimum K0 for the downlink BWP of the terminal device or configures only one minimum K2 for the uplink BWP of the terminal device, it may be considered that a minimum K0 or minimum K2 corresponding to an index 1 is the minimum K0 or minimum K2 configured by the network device, and a value of a minimum K0 or minimum K2 corresponding to an index 0 is 0. Without loss of generality, the minimum K0 having the index 0 and the minimum K0 having the index 1 may be determined according to a preset rule. For example, in higher layer signaling, the first minimum K0 is the minimum K0 having the index 0, and the second minimum K0 is the minimum K0 having the index 1.

In addition, the correspondence between the minimum K0 configured by the network device for the downlink BWP of the terminal device and the minimum K2 configured for the uplink BWP of the terminal device may be included in the configuration information from the network device to the terminal device, and is sent to the terminal device by the network device by using the configuration information. Alternatively, the correspondence may be defined in a protocol and written into the network device and terminal device in advance.

In an example, the configuration information may be sent by using a dedicated (dedicated) RRC message of the terminal device or another RRC configuration message.

S402: The network device sends DCI to the terminal device, and the terminal device receives the DCI.

The DCI includes indication information. The indication information indicates one of the at least one minimum K0 configured for the downlink BWP of the terminal device, or indicates one of the at least one minimum K2 configured for the uplink BWP of the terminal device.

In a possible implementation, the DCI does not indicate the terminal device to switch a currently activated downlink BWP and uplink BWP. If the DCI is for scheduling downlink data, that is, the DCI is downlink DCI, the indication information included in the DCI indicates one minimum K0 in a minimum K0 set of the currently activated downlink BWP of the terminal device; and if the DCI is for scheduling uplink data, that is, the DCI is uplink DCI, the indication information included in the DCI indicates one minimum K2 in a minimum K2 set of the currently activated uplink BWP of the terminal device.

For example, the DCI does not indicate the terminal device to switch the currently activated downlink BWP and uplink BWP, and is downlink DCI used to schedule downlink data. In this case, the currently activated downlink BWP of the terminal device is the downlink BWP #i, and the indication information included in the DCI is 1, to indicate $minK0_{DLBWP\#i,\ 1}$ having the index 1 in $\{minK0_{DLBWP\ \#i,\ 0}, minK0_{DLBWP\ \#i,\ 1}\}$ configured for the downlink BWP #i.

In another possible implementation, the DCI (which is actually a BWP indicator field of the DCI and is also applicable to the following embodiments, and details are not repeatedly described) indicates the terminal device to switch a currently activated downlink BWP or uplink BWP; when the DCI indicates the terminal device to switch the activated downlink BWP to a to-be-activated downlink BWP, the DCI is downlink DCI used to schedule downlink data, and the indication information included in the DCI indicates one minimum K0 in a minimum K0 set of the to-be-activated downlink BWP; and when the DCI indicates the terminal device to switch the activated uplink BWP to a to-be-activated uplink BWP, the DCI is uplink DCI used to schedule uplink data, and the indication information included in the DCI indicates one minimum K2 in a minimum K2 set of the to-be-activated uplink BWP.

For example, the DCI indicates the terminal device to switch an activated uplink BWP from a currently activated uplink BWP #x to a to-be-activated uplink BWP #y. In this case, the DCI is uplink DCI used to schedule uplink data, and the indication information included in the DCI is 0, to indicate $minK2_{ULBWP \#y, 0}$ having the index 0 in $\{minK2_{ULBWP \#y, 0}, minK2_{ULBWP \#y, 1}\}$ configured for the BWP #y.

S403: The network device and the terminal device determine, based on the DCI, a valid minimum K0 of the downlink BWP of the terminal device and a valid minimum K2 of the uplink BWP of the terminal device.

In this embodiment of this application, when the DCI does not indicate the terminal device to switch the currently activated downlink BWP and uplink BWP, the network device and the terminal device determine, based on the DCI, a valid minimum K0 of the currently activated downlink BWP of the terminal device and a valid minimum K2 of the currently activated uplink BWP of the terminal device.

When the DCI indicates the terminal device to switch the activated downlink BWP from the currently activated downlink BWP to the to-be-activated downlink BWP, the network device and the terminal device determine, based on the DCI, a valid minimum K0 of the to-be-activated downlink BWP of the terminal device and a valid minimum K2 of the currently activated uplink BWP of the terminal device; and when the DCI indicates the terminal device to switch the activated uplink BWP from the currently activated uplink BWP to the to-be-activated uplink BWP, the network device and the terminal device determine, based on the DCI, a valid minimum K0 of the currently activated downlink BWP of the terminal device and a valid minimum K2 of the to-be-activated uplink BWP of the terminal device.

That is, when the DCI indicates the terminal device to switch the currently activated downlink BWP or uplink BWP, after the terminal device switches to the to-be-activated uplink BWP or downlink BWP based on the DCI, the network device and the terminal device determine, based on the DCI, the valid minimum K0 of the currently activated downlink BWP of the terminal device and the valid minimum K2 of the uplink BWP of the terminal device. In addition, the foregoing descriptions of determining, based on the DCI, the valid minimum K0 of the downlink BWP of the terminal device and the valid minimum K2 of the uplink BWP of the terminal device are also applicable to the following embodiments, and details are not repeatedly described.

For example, if the DCI is for scheduling downlink data, and does not indicate the terminal device to switch the currently activated downlink BWP and uplink BWP, the currently activated downlink BWP of the terminal device is the downlink BWP #i, the uplink BWP is the uplink BWP #x, and the indication information included in the DCI is 1, to indicate $minK0_{DLBWP \#i, 1}$ having the index 1 in $\{minK0_{DLBWP \#i, 0}, minK0_{DLBWP \#i, 1}\}$ of the downlink BWP #i, the network device and the terminal device determine that a valid minimum K0 of the downlink BWP #i is $minK0_{DLBWP \#i, 1}$, 1. In this case, a value of a valid minimum K2 of the uplink BWP #x is updated to $minK2_{ULBWP \#x, 1}$ corresponding to $minK0_{DLBWP \#i, 1}$.

For another example, if the currently activated downlink BWP of the terminal device is the downlink BWP #i, the uplink BWP is the uplink BWP #x, the DCI indicates the terminal device to switch the currently activated uplink BWP #x to the to-be-activated uplink BWP #y, the DCI is uplink DCI used to schedule uplink data, and the indication information included in the DCI is 0, to indicate $minK2_{ULBWP \#y, 0}$ having the index 0 in $\{minK2_{ULBWP \#y, 0}, minK2_{ULBWP \#y, 1}\}$ of the uplink BWP #y, the network device and the terminal device determine that a valid minimum K2 of the uplink BWP #y is $minK2_{ULBWP \#y, 0}$. In this case, a value of a valid minimum K0 of the downlink BWP #i is updated to $minK0_{DLBWP \#i, 0}$ corresponding to $minK2_{ULBWP \#y, 0}$.

In a possible implementation, if no minimum K0 is configured for the downlink BWP indicated by the indication information, or no minimum K2 is configured for the uplink BWP indicated by the indication information, the valid minimum K0 of the downlink BWP and the valid minimum K2 of the uplink BWP may be determined in the following manners.

Manner 1: A value of the valid minimum K0 of the downlink BWP of the terminal device and a value of the valid minimum K2 of the uplink BWP are both updated to 0 or a value corresponding to the index 0. If no minimum K0 is not configured for the downlink BWP or no minimum K2 is not configured for the uplink BWP, the value of the minimum K0 or minimum K2 corresponding to the index 0 is 0.

For example, the terminal device currently activates the downlink BWP #i and the uplink BWP #x, and the DCI indicates the terminal device to switch the currently activated downlink BWP #i to the to-be-activated downlink BWP #j, but no minimum K0 is configured for the downlink BWP #j. In this case, the network device and the terminal device determine that the value of the valid minimum K0 of the downlink BWP #j and the value of the valid minimum K2 of the uplink BWP #x are both updated to 0, or are both updated to the value corresponding to the index 0.

Manner 2: If the DCI indicates the terminal device to switch the activated downlink BWP from the currently activated downlink BWP to the to-be-activated downlink BWP, or switch the activated uplink BWP from the currently activated uplink BWP to the to-be-activated uplink BWP, the value of the valid minimum K0 of the downlink BWP of the terminal device and the value of the valid minimum K2 of the uplink BWP of the terminal device are respectively a valid minimum K0 and a valid minimum K2 before or when the DCI is received.

For example, the terminal device currently activates the downlink BWP #i and the uplink BWP #x, and the DCI indicates the terminal device to switch the currently activated uplink BWP #x to the to-be-activated uplink BWP #y, but no minimum K0 is configured for the BWP #y. In this case, the network device and the terminal device determine that the valid minimum K0 of the downlink BWP #i is still the valid minimum K0 of the downlink BWP #i before or when the DCI is received, and the valid minimum K2 of the uplink BWP #y is the valid minimum K2 of the uplink BWP #x before or when the DCI is received.

**Embodiment 2**

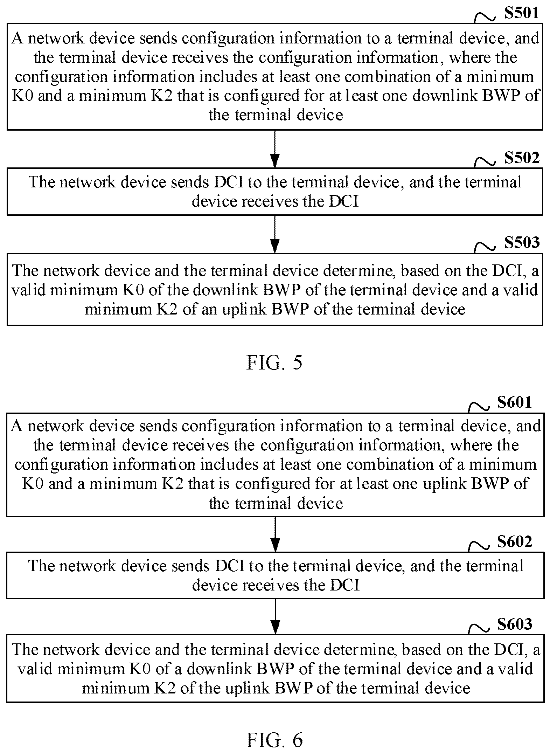

FIG. 5 is a schematic diagram of a communication process according to an embodiment of this application. The process includes the following steps.

S501: A network device sends configuration information to a terminal device, and the terminal device receives the configuration information, where the configuration information includes at least one combination of a minimum K0 and a minimum K2 that is configured for at least one downlink BWP of the terminal device.

For example, at least one combination of a minimum K0 and a minimum K2 that is configured by the network device for a downlink BWP #i of the terminal device includes $\{minK0_{DLBWP\ \#i,\ 0}$ and $minK2_{DLBWP\ \#i,\ 0}\}$ and $\{minK0_{DLBWP\ \#i,\ 1}$ and $minK2_{DLBWP\ \#i,\ 1}\}$, and at least one combination of a minimum K0 and a minimum K2 that is configured for a downlink BWP #j includes $\{minK0_{DLBWP\ \#j,\ 0}$ and $minK2_{DLBWP\ \#j,\ 0}\}$ and $\{minK0_{DLBWP\ \#j,\ 1}$ and $minK2_{DLBWP\ \#j,\ 1}\}$.

S502: The network device sends DCI to the terminal device, and the terminal device receives the DCI.

The DCI includes indication information. The indication information indicates one of the at least one combination of the minimum K0 and the minimum K2 that is configured for the downlink BWP of the terminal device.

In a possible implementation, when the DCI does not indicate the terminal device to switch a currently activated downlink BWP, the indication information indicates one of at least one combination of a minimum K0 and a minimum K2 that is configured for the currently activated downlink BWP of the terminal device.

In this embodiment of this application, that the DCI does not indicate the terminal device to switch a currently activated downlink BWP includes two cases. In a first case, the DCI does not indicate the terminal device to switch the currently activated downlink BWP and a currently activated uplink BWP. In a second case, the DCI indicates the terminal device to switch the currently activated uplink BWP to a to-be-activated uplink BWP.

In other words, when the DCI does not indicate the terminal device to switch the currently activated downlink BWP and uplink BWP, regardless of whether the DCI is for scheduling uplink data or downlink data, that is, regardless of whether the DCI is uplink DCI or downlink DCI, the indication information included in the DCI indicates one of the at least one combination of the minimum K0 and the minimum K2 that is configured for the currently activated downlink BWP of the terminal device. When the DCI indicates the terminal device to switch the currently activated uplink BWP to the to-be-activated uplink BWP, although the DCI is uplink DCI used to schedule uplink data, the indication information included in the DCI still indicates one of the at least one combination of the minimum K0 and the minimum K2 that is configured for the currently activated downlink BWP of the terminal device.

In another possible implementation, when the downlink control information indicates the terminal device to switch an activated downlink BWP from the currently activated downlink BWP to a to-be-activated downlink BWP, the indication information indicates one of at least one combination of a minimum K0 and a minimum K2 that is configured for the to-be-activated downlink BWP.

S503: The network device and the terminal device determine, based on the DCI, a valid minimum K0 of the downlink BWP of the terminal device and a valid minimum K2 of the uplink BWP of the terminal device.

In a possible implementation, when the DCI does not indicate the terminal device to switch the currently activated downlink BWP and uplink BWP, the network device and the terminal device use, based on the indication information included in the DCI, one combination that is of the minimum K0 and the minimum K2 of the currently activated downlink BWP of the terminal device and that is indicated by the indication information as a valid minimum K0 of the currently activated downlink BWP of the terminal device and a valid minimum K2 of the currently activated uplink BWP of the terminal device.

For example, the currently activated downlink BWP of the terminal device is the downlink BWP #i, the currently activated uplink BWP is an uplink BWP #x, the at least one combination of the minimum K0 and the minimum K2 that is configured for the downlink BWP #i includes $\{minK0_{DLBWP\ \#i,\ 0}$ and $minK2_{DLBWP\ \#i,\ 0}\}$ and $\{minK0_{DLBWP\ \#i,\ 1}$ and $minK2_{DLBWP\ \#i,\ 1}\}$, and the indication information included in the DCI indicates $\{minK0_{DLBWP\ \#i,\ 1}$ and $minK2_{DLBWP\ \#i,\ 1}\}$ having an index 1 in $\{minK0_{DLBWP\ \#i,\ 0}$ and $minK2_{DLBWP\ \#i,\ 0}\}$ and $\{minK0_{DLBWP\ \#i,\ 1}$ and $minK2_{DLBWP\ \#i,\ 1}\}$ that are configured for the downlink BWP #i. In this case, the network device and the terminal device determine that the valid minimum K0 of the downlink BWP #i is $minK0_{DLBWP\ \#i,\ 1}$, and the valid minimum K2 of the uplink BWP #x is $minK2_{DLBWP\ \#i,\ 1}$.

In a possible implementation, when the DCI indicates the terminal device to switch the activated downlink BWP from the currently activated downlink BWP to the to-be-activated downlink BWP, the network device and the terminal device use, based on the indication information included in the DCI, one combination that is of the minimum K0 and the minimum K2 of the to-be-activated downlink BWP of the terminal device and that is indicated by the indication information as a valid minimum K0 of the to-be-activated downlink BWP of the terminal device and a valid minimum K2 of the currently activated uplink BWP of the terminal device.

For example, the currently activated downlink BWP of the terminal device is the downlink BWP #i, the currently activated uplink BWP is the uplink BWP #x, the to-be-activated downlink BWP is the downlink BWP #j, the at least one combination of the minimum K0 and the minimum K2 that is configured for the downlink BWP #j includes {$minK0_{DLBWP\ \#j,\ 0}$ and $minK2_{DLBWP\ \#j,\ 0}$} and {$minK0_{DLBWP\ \#j,\ 1}$ and $minK2_{DLBWP\ \#j,\ 1}$}, and the indication information included in the DCI indicates {$minK0_{DLBWP\ \#j,\ 0}$ and $minK2_{DLBWP\ \#j,\ 0}$} having an index $0$ in {$minK0_{DLBWP\ \#j,\ 0}$ and $minK2_{DLBWP\ \#j,\ 0}$} and {$minK0_{DLBWP\ \#j,\ 1}$ and $minK2_{DLBWP\ \#j,\ 1}$} that are configured for the downlink BWP #j. In this case, the network device and the terminal device determine that the valid minimum K0 of the downlink BWP #j is $minK0_{DLBWP\ \#j,\ 0}$, and the valid minimum K2 of the uplink BWP #x is $minK2_{DLBWP\ \#j,\ 0}$.

In another possible implementation, when the DCI indicates the terminal device to switch the activated uplink BWP from the currently activated uplink BWP to the to-be-activated uplink BWP, the network device and the terminal device use, based on the indication information included in the DCI, one combination that is of the minimum K0 and the minimum K2 of the currently activated downlink BWP of the terminal device and that is indicated by the indication information as a valid minimum K0 of the currently activated downlink BWP of the terminal device and a valid minimum K2 of the to-be-activated uplink BWP of the terminal device.

Optionally, when the terminal device switches the currently activated uplink BWP to the to-be-activated uplink BWP, the valid minimum K2 of the to-be-activated uplink BWP also needs to be converted based on a subcarrier spacing (SCS) of the to-be-activated uplink BWP. A size of the subcarrier spacing is represented as $15*2^{\mu}$ kHz, where $\mu=0$, 1, 2, 3, or 4. 15 kHz may be considered as a baseline subcarrier spacing, $\mu$ is a scaling factor of the subcarrier spacing, and the valid minimum K2 of the to-be-activated uplink BWP is converted based on a ratio of a subcarrier spacing size of the to-be-activated uplink BWP to a subcarrier spacing size of the currently activated uplink BWP, to obtain

$$\frac{2^{\mu\_bwp2}}{2^{\mu\_bwp1}}*minimum\ K2$$

, where *minimum K2* is the minimum K2 indicated by the indication information, $\mu\_bwp1$ is a scaling factor of the currently activated downlink BWP, and $\mu\_bwp2$ is a scaling factor of the to-be-activated uplink BWP. That is, the valid minimum K2 of the to-be-activated uplink BWP is converted

$$\frac{2^{\mu\_bwp2}}{2^{\mu\_bwp1}}*minimum\ K2$$

through to match slot lengths of different subcarrier spacings.

**Embodiment 3**

FIG. 6 is a schematic diagram of a communication process according to an embodiment of this application. The process includes the following steps.

S601: A network device sends configuration information to a terminal device, and the terminal device receives the configuration information, where the configuration information includes at least one combination of a minimum K0 and a minimum K2 that is configured for at least one uplink BWP of the terminal device.

For example, at least one combination of a minimum K0 and a minimum K2 that is configured by the network device for an uplink BWP #x of the terminal device includes {$minK0_{uLBWP\ \#x,\ 0}$ and $minK2_{uLBWP\ \#x,\ 0}$} and {$minK0_{uLBWP\ \#x,\ 1}$ and $minK2_{uLBWP\ \#x,\ 1}$}, and at least one combination of a minimum K0 and a minimum K2 that is configured for an uplink BWP #y includes {$minK0_{uLBWP\ \#y,\ 0}$ and $minK2_{uLBWP\ \#y,\ 0}$} and {$minK0_{uLBWP\ \#y,\ 1}$ and $minK2_{uLBWP\ \#y,\ 1}$}.

S602: The network device sends DCI to the terminal device, and the terminal device receives the DCI.

The DCI includes indication information. The indication information indicates one of the at least one combination of the minimum K0 and the minimum K2 that is configured for the uplink BWP of the terminal device.

In a possible implementation, when the DCI does not indicate the terminal device to switch a currently activated uplink BWP, the indication information indicates one of at least one combination of a minimum K0 and a minimum K2 that is configured for the currently activated uplink BWP of the terminal device.

In this embodiment of this application, that the DCI does not indicate the terminal device to switch a currently activated uplink BWP includes two cases. In a first case, the DCI does not indicate the terminal device to switch the currently activated uplink BWP and a currently activated downlink BWP. In a second case, the DCI indicates the terminal device to switch the currently activated downlink BWP to a to-be-activated downlink BWP.

In other words, when the DCI does not indicate the terminal device to switch the currently activated downlink BWP and uplink BWP, regardless of whether the DCI is for scheduling uplink data or downlink data, that is, regardless of whether the DCI is uplink DCI or downlink DCI, the indication information included in the DCI indicates one of the at least one combination of the minimum K0 and the minimum K2 that is configured for the currently activated uplink BWP of the terminal device. When the DCI indicates the terminal device to switch the currently activated downlink BWP to the to-be-activated downlink BWP, although the DCI is downlink DCI used to schedule downlink data, the indication information included in the DCI is still indicates one of the at least one combination of the minimum K0 and the minimum K2 that is configured for the currently activated uplink BWP of the terminal device.

In another possible implementation, when the DCI indicates the terminal device to switch an activated uplink BWP from the currently activated uplink BWP to a to-be-activated uplink BWP, the indication information indicates one of at least one combination of a minimum K0 and a minimum K2 that is configured for the to-be-activated uplink BWP.

S603: The network device and the terminal device determine, based on the DCI, a valid minimum K0 of the downlink BWP of the terminal device and a valid minimum K2 of the uplink BWP of the terminal device.

In a possible implementation, when the DCI does not indicate the terminal device to switch the currently activated downlink BWP and uplink BWP, the network device and the terminal device use, based on the indication information included in the DCI, one combination that is of the minimum K0 and the minimum K2 of the currently activated uplink BWP of the terminal device and that is indicated by the indication information as a valid minimum K0 of the currently activated downlink BWP of the terminal device and a valid minimum K2 of the currently activated uplink BWP of the terminal device.

For example, the currently activated downlink BWP of the terminal device is a downlink BWP #i, the currently activated uplink BWP is the uplink BWP #x, the at least one combination of the minimum K0 and the minimum K2 that is configured for the uplink BWP #x includes $\{minK0_{uLBWP \#x, 0}$ and $minK2_{uLBWP \#x, 0}\}$ and $\{minK0_{uLBWP \#x, 1}$ and $minK2_{uLBWP \#x, 1}\}$, and the indication information included in the DCI indicates $\{minK0_{uLBWP \#x, 1}$ and $minK2_{uLBWP \#x, 1}\}$ having an index 1 in $\{minK0_{uLBWP \#x, 0}$ and $minK2_{uLBWP \#x, 0}\}$ and $\{minK0_{uLBWP \#x, 1}$ and $minK2_{uLBWP \#x, 1}\}$ that are configured for the uplink BWP #x. In this case, the network device and the terminal device determine that the valid minimum K0 of the downlink BWP #i is $minK0_{uLBWP \#x, 1}$, and the valid minimum K2 of the uplink BWP #x is $minK2_{uLBWP \#x, 1}$.

In a possible implementation, when the DCI indicates the terminal device to switch the activated uplink BWP from the currently activated uplink BWP to the to-be-activated uplink BWP, the network device and the terminal device use, based on the indication information included in the DCI, one combination that is of the minimum K0 and the minimum K2 of the to-be-activated uplink BWP and that is indicated by the indication information as a valid minimum K0 of the currently activated downlink BWP of the terminal device and a valid minimum K2 of the to-be-activated uplink BWP of the terminal device.

For example, the currently activated downlink BWP of the terminal device is the downlink BWP #i, the currently activated uplink BWP is the uplink BWP #x, the to-be-activated uplink BWP is the uplink BWP #y, the at least one combination of the minimum K0 and the minimum K2 that is configured for the uplink BWP #y includes $\{minK0_{uLBWP \#y, 0}$ and $minK2_{uLBWP \#y, 0}\}$ and $\{minK0_{uLBWP \#y, 1}$ and $minK2_{uLBWP \#y, 1}\}$, and the indication information included in the DCI indicates $\{minK0_{uLBWP \#y, 0}$ and $minK2_{uLBWP \#y, 0}\}$ having an index 0 in $\{minK0_{uLBWP \#y, 0}$ and $minK2_{uLBWP \#y, 0}\}$ and $\{minK0_{uLBWP \#y, 1}$ and $minK2_{uLBWP \#y, 1}\}$ that are configured for the uplink BWP #y. In this case, the network device and the terminal device determine that the valid minimum K0 of the downlink BWP #i is $minK0_{uLBWP \#y, 0}$, and the valid minimum K2 of the uplink BWP #y is $minK2_{uLBWP \#y, 0}$.

In another possible implementation, when the DCI indicates the terminal device to switch the activated downlink BWP from the currently activated downlink BWP to the to-be-activated downlink BWP, the network device and the terminal device use, based on the indication information included in the DCI, one combination that is of the minimum K0 and the minimum K2 of the currently activated uplink BWP of the terminal device and that is indicated by the indication information as a valid minimum K0 of the to-be-activated downlink BWP of the terminal device and a valid minimum K2 of the currently activated uplink BWP of the terminal device.

Optionally, when the terminal device switches the currently activated downlink BWP to the to-be-activated downlink BWP, the valid minimum K0 of the to-be-activated downlink BWP also needs to be converted based on an SCS of the to-be-activated downlink BWP. A size of the subcarrier spacing is represented as $15*2^{\mu}$ kHz, where $\mu$=0, 1, 2, 3, or 4. 15 kHz may be considered as a baseline subcarrier spacing, $\mu$ is a scaling factor of the subcarrier spacing, and the valid minimum K0 of the to-be-activated downlink BWP is converted based on a ratio of a subcarrier spacing size of the to-be-activated downlink BWP to a subcarrier spacing size of the currently activated downlink BWP, to obtain

$$\frac{2^{\mu\_bwp2}}{2^{\mu\_bwp1}} * minimum\ K0$$

, where *minimum* K0 is the minimum K0 indicated by the indication information, $\mu\_bwp1$ is a scaling factor of the currently activated downlink BWP, and $\mu\_bwp2$ is a scaling factor of the to-be-activated uplink BWP. That is, the valid minimum K0 of the to-be-activated downlink BWP is corrected through

$$\frac{2^{\mu\_bwp2}}{2^{\mu\_bwp1}} * minimum\ K0$$

.

**Embodiment 4**

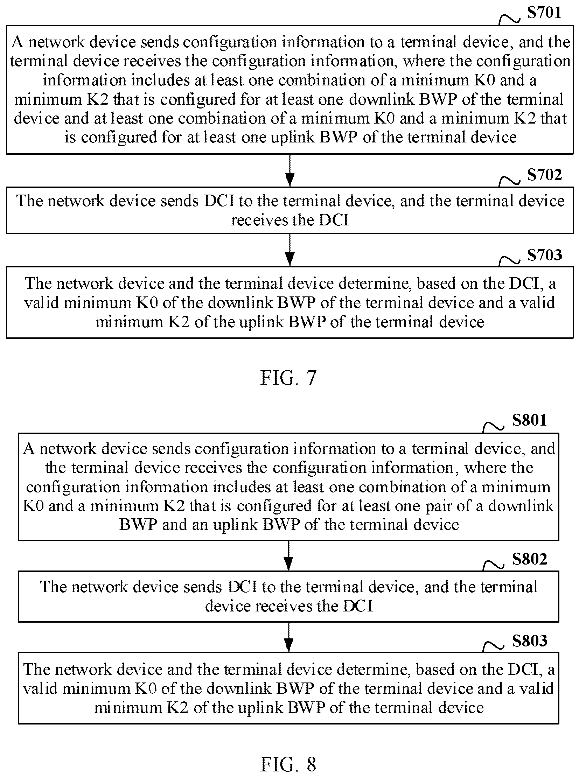

FIG. 7 is a schematic diagram of a communication process according to an embodiment of this application. The process includes the following steps.

S701: A network device sends configuration information to a terminal device, and the terminal device receives the configuration information, where the configuration information includes at least one combination of a minimum K0 and a minimum K2 that is configured for at least one downlink BWP of the terminal device and at least one combination of a minimum K0 and a minimum K2 that is configured for at least one uplink BWP of the terminal device.

For example, at least one combination of a minimum K0 and a minimum K2 that is configured by the network device for a downlink BWP #i of the terminal device includes $\{minK0_{DLBWP\,\#i,\,0}$ and $minK2_{DLBWP\,\#i,\,0}\}$ and $\{minK0_{DLBWP\,\#i,\,1}$ and $minK2_{DLBWP\,\#i,\,1}\}$, at least one combination of a minimum K0 and a minimum K2 that is configured for a downlink BWP #j includes $\{minK0_{DLBWP\,\#j,\,0}$ and $minK2_{DLBWP\,\#j,\,0}\}$ and $\{minK0_{DLBWP\,\#j,\,1}$ and $minK2_{DLBWP\,\#j,\,1}\}$, at least one combination of a minimum K0 and a minimum K2 that is configured for an uplink BWP #x includes $\{minK0_{uLBWP\#x,\,0}$ and $minK2_{uLBWP\#x,\,0}\}$ and $\{minK0_{uLBWP\#x,\,1}$ and $minK2_{uLBWP\,\#x,\,1}\}$, and at least one combination of a minimum K0 and a minimum K2 that is configured for an uplink BWP #y includes $\{minK0_{uLBWP\,\#y,\,0}$ and $minK2_{uLBWP\,\#y,\,0}\}$ and $\{minK0_{uLBWP\,\#y,\,1}$ and $minK2_{uLBWP\,\#y,\,1}\}$.

S702: The network device sends DCI to the terminal device, and the terminal device receives the DCI.

The DCI includes indication information. The indication information indicates one of the at least one combination of the minimum K0 and the minimum K2 that is configured for the downlink BWP of the terminal device, or indicate one of the at least one combination of the minimum K0 and the minimum K2 that is configured for the uplink BWP of the terminal device.

In a possible implementation, the DCI does not indicate the terminal device to switch a currently activated downlink BWP and uplink BWP. If the DCI is for scheduling downlink data, that is, the DCI is downlink DCI, the indication information indicates one of at least combination of a minimum K0 and a minimum K2 that is configured for the currently activated downlink BWP of the terminal device; and if the DCI is for scheduling uplink data, that is, the DCI is uplink DCI, the indication information indicates one of at least one combination of a minimum K0 and a minimum K2 that is configured for the currently activated uplink BWP of the terminal device.

In another possible implementation, the DCI indicates the terminal device to switch a currently activated downlink BWP or uplink BWP. When the DCI indicates the terminal device to switch an activated downlink BWP from the currently activated downlink BWP to a to-be-activated downlink BWP, the DCI is downlink DCI used to schedule downlink data, and the indication information indicates one of at least combination of a minimum K0 and a minimum K2 that is configured for the to-be-activated downlink BWP; and when the DCI indicates the terminal device to switch an activated uplink BWP from the currently activated uplink BWP to a to-be-activated uplink BWP, the DCI is uplink DCI used to schedule uplink data, and the indication information indicates one of at least combination of a minimum K0 and a minimum K2 that is configured for the to-be-activated uplink BWP.

S703: The network device and the terminal device determine, based on the DCI, a valid minimum K0 of the downlink BWP of the terminal device and a valid minimum K2 of the uplink BWP of the terminal device.

In a possible implementation, when the indication information indicates one of the at least one combination of the minimum K0 and the minimum K2 that is configured for the downlink BWP of the terminal device, the network device and the terminal device use the minimum K0 indicated by the indication information as the valid minimum K0 of the downlink BWP of the terminal device, and use a minimum K2 that is the same as or similar to the minimum K2 indicated by the indication information and that is in the at least one combination of the minimum K0 and the minimum K2 that is configured for the uplink BWP of the terminal device as the valid minimum K2 of the uplink BWP of the terminal device.

For example, the currently activated downlink BWP of the terminal device is the downlink BWP #i, the currently activated uplink BWP is the uplink BWP #x, the to-be-activated downlink BWP is the downlink BWP #j, and the at least one combination of the minimum K0 and the minimum K2 that is configured for the downlink BWP #j includes $\{minK0_{DLSWP\,\#j,\,0}$ and $minK2_{DLBWP\,\#j,\,0}\}$ and $\{minK0_{DLBWP\,\#j,\,1}$ and $minK2_{DLBWP\,\#j,\,1}\}$. The at least one combination of the minimum K0 and the minimum K2 that is configured for the uplink BWP #x includes $\{minK0_{uLBWP\#x,\,0}$ and $minK2_{uLBWP\#x,\,0}\}$ and $\{minK0_{uLBWP\#x,\,1}$ and $minK2_{uLBWP\,\#x,\,1}\}$, and the indication information included in the DCI indicates $\{minK0_{DLBWP\,\#j,\,0}$ and $minK2_{DLBWP\,\#j,\,0}\}$ having an index 0 in $\{minK0_{DLBWP\,\#j,\,0}$ and $minK2_{DLBWP\,\#j,\,0}\}$ and $\{minK0_{DLBWP\,\#j,\,1}$ and $minK2_{DLBWP\,\#j,\,1}\}$ that are configured for the downlink BWP #j. In this case, the network device and the terminal device determine that the valid minimum K0 of the downlink BWP #j is $minK0_{DLBWP\#j,\,0}$, and the valid minimum K2 of the uplink BWP #x is a value that is the same as or closest to $minK2_{DLBWP\#j,\,0}$ and that is of $minK2_{uLBWP\#x,\,0}$ of $MinK2_{uLBWP\,\#x,\,1}$.

In a possible implementation, when the indication information indicates one of the at least one combination of the minimum K0 and the minimum K2 that is configured for the uplink BWP of the terminal device, the network device and the terminal device use the minimum K2 indicated by the indication information as the valid minimum K2 of the uplink BWP of the terminal device, and use a minimum K0 that is the same as or similar to the minimum K0 indicated by the indication information and that is in the at least one combination of the minimum K0 and the minimum K2 that is configured for the downlink BWP of the terminal device as the valid minimum K0 of the downlink BWP of the terminal device.

For example, the currently activated downlink BWP of the terminal device is the downlink BWP #i, the currently activated uplink BWP is the uplink BWP #x, the to-be-activated uplink BWP is the uplink BWP #y, the at least one combination of the minimum K0 and the minimum K2 that is configured for the uplink BWP #y includes $\{minK0_{uLBWP\ \#y,\ 0}$ and $minK2_{uLBWP\ \#y,\ 0}\}$ and $\{minK0_{uLBWP\ \#y,\ 1}$ and $minK2_{uLBWP\ \#y,\ 1}\}$, the at least one combination of the minimum K0 and the minimum K2 that is configured for the downlink BWP #i includes $\{minK0_{DLBWP\ \#i,\ 0}$ and $minK2_{DLBWP\ \#i,\ 0}\}$ and $\{minK0_{DLBWP\ \#i,\ 1}$ and $minK2_{DLBWP\ \#i,\ 1}\}$, and the indication information included in the DCI indicates $\{minK0_{uLBWP\ \#y,\ 0}$ and $minK2_{uLBWP\ \#y,\ 0}\}$ having an index $0$ in $\{minK0_{uLBWP\ \#y,\ 0}$ and $minK2_{uLBWP\ \#y,\ 0}\}$ and $\{minK0_{uLBWP\ \#y,\ 1}$ and $minK2_{uLBWP\ \#y,\ 1}\}$ that are configured for the uplink BWP #y. In this case, the network device and the terminal device determine that the valid minimum K2 of the uplink BWP #y is $minK2_{uLBWP\#y,\ 0}$, and the valid minimum K0 of the downlink BWP #i is a value that is the same as or closet to $minK0_{uLBWP\ \#y,\ 0}$ and that is of $minK0_{DLBWP\ \#i,\ 0}$ or $minK0_{DLBWP\ \#i,\ 1}$.

**Embodiment 5**

FIG. 8 is a schematic diagram of a communication process according to an embodiment of this application. The process includes the following steps.

S801: A network device sends configuration information to a terminal device, and the terminal device receives the configuration information, where the configuration information includes at least one combination of a minimum K0 and a minimum K2 that is configured for at least one pair (pair) of an uplink BWP and a downlink BWP of the terminal device.

For example, at least one combination a minimum K0 and a minimum K2 that is configured by the network device for a pair of a downlink BWP #i and an uplink BWP #x of the terminal device includes $\{minK0_{DLBWP\ \#i,\ 0}$ and $minK2_{ULBWP\ \#x,\ 0}\}$ and $\{minK0_{DLBWP\ \#i,\ 1}$ and $minK2_{uLBWP\ \#x,\ 1}\}$, at least one combination of a minimum K0 and a minimum K2 that is configured for a pair of a downlink BWP #j and the uplink BWP #x of the terminal device includes $\{minK0_{DLBWP\#j,\ 0}$ and $minK2_{uLBWP\ \#x,\ 0}\}$ and $\{minK0_{DLBWP\ \#j,\ 1}$ and $minK2_{uLBWP\#x,\ 1}\}$, at least one combination of a minimum K0 and a minimum K2 that is configured for a pair of the downlink BWP #i and an uplink BWP #y of the terminal device includes $\{minK0_{DLBWP\#i,\ 0}$ and $minK2_{ULBWP\#y,\ 0}\}$ and $\{minK0_{DLBWP\#i,\ 1}$ and $minK2_{uLBWP\#y,\ 1}\}$, and at least one combination of a minimum K0 and a minimum K2 that is configured for a pair of the downlink BWP #j and the uplink BWP #y of the terminal device includes $\{minK0_{DLBWP\ \#j,\ 0}$ and $minK2_{ULBWP\ \#y,\ 0}\}$ and $\{minK0_{DLBWP\#j,\ 1}$ and $minK2_{ULBWP\#y,\ 1}\}$.

S802: The network device sends DCI to the terminal device, and the terminal device receives the DCI.

The DCI includes indication information. The indication information indicates one of the at least one combination of the minimum K0 and the minimum K2 that is configured for the pair of the downlink BWP and the uplink BWP of the terminal device.

In a possible implementation, when the downlink control information does not indicate the terminal device to switch a currently activated uplink BWP and downlink BWP, the indication information indicates one of at least one combination of a minimum K0 and a minimum K2 that is configured for a pair of the currently activated downlink BWP and uplink BWP of the terminal device.

In a possible implementation, when the downlink control information indicates the terminal device to switch an activated downlink BWP from the currently activated downlink BWP to a to-be-activated downlink BWP, the indication information indicates one of at least one combination of a minimum K0 and a minimum K2 that is configured for a pair of the to-be-activated downlink BWP and the currently activated uplink BWP of the terminal device.

For example, the terminal device currently activates the downlink BWP #i and the uplink BWP #x, and the network device indicates, by using downlink DCI, the terminal device to switch the currently activated downlink BWP #i to the downlink BWP #j, where the indication information included in the DCI indicates one of the at least one combination of the minimum K0 and the minimum K2 that is configured for the pair of the downlink BWP #j and the uplink BWP #x.

In a possible implementation, when the downlink control information indicates the terminal device to switch an activated uplink BWP from the currently activated uplink BWP to a to-be-activated uplink BWP, the indication information indicates one of at least one combination of a minimum K0 and a minimum K2 that is configured for a pair of the currently activated downlink BWP and the to-be-activated uplink BWP of the terminal device.

For example, the terminal device currently activates the downlink BWP #i and the uplink BWP #x, and the network device indicates, by using uplink DCI, the terminal device to switch the currently activated uplink BWP #x to the uplink BWP #y, where the indication information included in the DCI indicates one of the at least one combination of the minimum K0 and the minimum K2 that is configured for the pair of the downlink BWP #i and the uplink BWP #y.

S803: The network device and the terminal device determine, based on the DCI, a valid minimum K0 of the downlink BWP of the terminal device and a valid minimum K2 of the uplink BWP of the terminal device.

In this embodiment of this application, when the downlink control information does not indicate the terminal device to switch the currently activated uplink BWP and downlink BWP, the network device and the terminal device use, based on the indication information included in the DCI, one combination that is of the minimum K0 and the minimum K2 of the pair of the currently activated downlink BWP and uplink BWP of the terminal device and that is indicated by the indication information as a valid minimum K0 of the currently activated downlink BWP of the terminal device and a valid minimum K2 of the currently activated uplink BWP of the terminal device.

When the downlink control information indicates the terminal device to switch the activated downlink BWP from the currently activated downlink BWP to the to-be-activated downlink BWP, the network device and the terminal device use, based on the indication information included in the DCI, one combination that is of the minimum K0 and the minimum K2 of the pair of the to-be-activated downlink BWP and the currently activated uplink BWP of the terminal device and that is indicated by the indication information as a valid minimum K0 of the to-be-activated downlink BWP of the terminal device and a valid minimum K2 of the currently activated uplink BWP of the terminal device.

For example, the terminal device currently activates the downlink BWP #i and the uplink BWP #x, the network device indicates, by using the downlink DCI, the terminal device to switch the currently activated downlink BWP #i to the downlink BWP #j, the at least one combination of the minimum K0 and the minimum K2 that is configured for the pair of the downlink BWP #j and the uplink BWP #x includes $\{minK0_{DLBWP\#j,\ 0}$ and $minK2_{uLBWP\ \#x,\ 0}\}$ and $\{minK0_{DLBWP\ \#j,\ 1}$ and $minK2_{uLBWP\ \#x,\ 1}\}$, and the indication information included in the DCI indicates $\{minK0_{DLBWP\ \#j,\ 0}$ and $minK2_{uLBWP\#x,\ 0}\}$ having an index 0 in $\{minK0_{DLBWP\ \#j,\ 0}$ and $minK2_{uLBWP\ \#x,\ 0}\}$ and $\{minK0_{DLBWP\ \#j,\ 1}$ and $minK2_{uLBWP\ \#x,\ 1}\}$ that are configured for the pair of the downlink BWP #j and the uplink BWP #x. In this case, the network device and the terminal device determine that the valid minimum K0 of the downlink BWP #j is $minK0_{DLBWP\#j,\ 0}$, and the valid minimum K2 of the uplink BWP #x is $minK2_{uLBWP\ \#x,\ 0}$.

Similarly, when the downlink control information indicates the terminal device to switch the activated uplink BWP from the currently activated uplink BWP to the to-be-activated uplink BWP, the network device and the terminal device use, based on the indication information included in the DCI, one combination that is of the minimum K0 and the minimum K2 of the pair of the to-be-activated uplink BWP and the currently activated downlink BWP of the terminal device and that is indicated by the indication information as a valid minimum K0 of the currently activated downlink BWP of the terminal device and a valid minimum K2 of the to-be-activated uplink BWP of the terminal device.

In a possible implementation, if no combination of a minimum K0 and a minimum K2 is configured for a pair of an uplink BWP and a downlink BWP of the terminal device, and if the DCI indicates the terminal device to switch the activated downlink BWP from the currently activated downlink BWP to a to-be-activated downlink BWP and no combination of a minimum K0 and a minimum K2 is configured for a pair of the to-be-activated downlink BWP and the currently activated uplink BWP, a value of a valid minimum K0 of the to-be-activated downlink BWP and a value of a valid minimum K2 of the currently activated uplink BWP both roll back to 0. If the DCI indicates the terminal device to switch the activated uplink BWP from the currently activated uplink BWP to a to-be-activated uplink BWP, and no combination of a minimum K0 and a minimum K2 is configured for a pair of the currently activated downlink BWP and the to-be-activated uplink BWP, a value of a valid minimum K0 of the currently activated downlink BWP and a value of a valid minimum K2 of the to-be-activated uplink BWP both fall back to 0.

In another possible implementation, when the DCI indicates the terminal device to switch the currently activated uplink BWP to the to-be-activated uplink BWP or indicates the terminal device to switch the currently activated downlink BWP to the to-be-activated downlink BWP, if no combination of a minimum K0 and a minimum K2 is configured for the pair of the currently activated downlink BWP and the to-be-activated uplink BWP of the terminal device or for the pair of the to-be-activated downlink BWP and the currently activated uplink BWP, a valid minimum K0 of the currently activated downlink BWP of the terminal device and a valid minimum K2 of the to-be-activated uplink BWP of the terminal device are the valid minimum K0 and minimum K2 of the pair of the currently activated downlink BWP and the to-be-activated uplink BWP. Similarly, a valid minimum K0 of the to-be-activated downlink BWP of the terminal device and a valid minimum K2 of the currently activated uplink BWP of the terminal device are also the valid minimum K0 and minimum K2 of the pair of the to-be-activated downlink BWP and the currently activated uplink BWP. In addition, when the currently activated uplink BWP is switched to the to-be-activated uplink BWP or the currently activated downlink BWP is switched to the to-be-activated downlink BWP, an SCS of the to-be-activated downlink BWP may be different from an SCS of the currently activated downlink BWP, and an SCS of the to-be-activated uplink BWP may be different from an SCS of the currently activated uplink BWP. Alternatively, referring to Embodiment 2 and Embodiment 3, a minimum K0/minimum K2 of a to-be-activated BWP may be obtained by converting the minimum K0/minimum K2 of the currently activated uplink/downlink BWP.

**Embodiment 6**

The foregoing mainly describes the solutions provided in this application from a perspective of interaction between the network device and the terminal device. It may be understood that to implement the foregoing functions, each network element includes a corresponding hardware structure and/or software module (or unit) for implementing each function. A person skilled in the art should easily be aware that, in combination with the examples described in the embodiments disclosed in this specification, units and algorithm steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

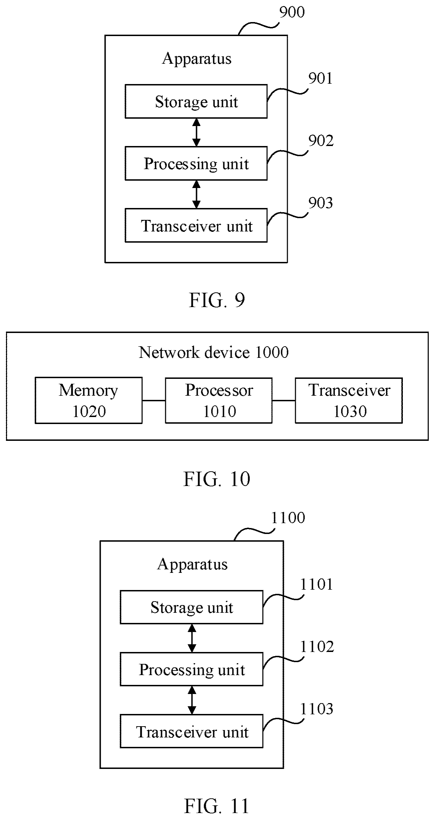

When an integrated unit (module) is used, FIG. 9 is a possible example block diagram of a communications apparatus according to an embodiment of this application. The communications apparatus 900 may exist in a form of software. The apparatus 900 may include a processing unit 902 and a transceiver unit 903.

In a possible design, the processing unit 902 is configured to implement a corresponding processing function. The transceiver unit 903 is configured to support the apparatus 900 in communicating with another network entity. Optionally, the transceiver unit 903 may include a receiving unit and/or a sending unit, which are respectively configured to perform a receiving operation and a sending operation. Optionally, the apparatus 900 may further include a storage unit 901, configured to store program code and/or data of the apparatus 900.

The apparatus 900 may be the network device in any one of the foregoing embodiments (where for example, the network device is the network device in Embodiment 1), or may be a component, such as a chip, disposed in the network device. The processing unit 902 may support the apparatus 900 in performing actions of the network device in the foregoing method examples. Alternatively, the processing unit 902 mainly performs internal actions of the network device in the method examples, and the transceiver unit 903 may support communication between the apparatus 900 and a terminal device.

Specifically, in a possible embodiment, the processing unit 902 is configured to generate downlink control information, where the downlink control information includes indication information, and the indication information indicates one of at least one minimum K0 configured for a downlink BWP of the terminal device, or the indication information indicates one of at least one minimum K2 configured for an uplink BWP of the terminal device, where at least one minimum K0 is configured for at least one downlink BWP of the terminal device, at least one minimum K2 is configured for at least one uplink BWP of the terminal device, and there is a correspondence between the minimum K0 configured for the downlink BWP and the minimum K2 configured for the uplink BWP; and

the transceiver unit 903 is configured to send the downlink control information to the terminal device.

In a possible design, the correspondence includes:

the minimum K0 configured for the downlink BWP and the minimum K2 configured for the uplink BWP are in a one-to-one correspondence in ascending order of indexes.

In a possible design, when the downlink control information does not indicate the terminal device to switch a currently activated downlink BWP and uplink BWP, if the downlink control information is for scheduling downlink data, the indication information indicates one of at least one minimum K0 configured for the currently activated downlink BWP of the terminal device; and if the downlink control information is for scheduling uplink data, the indication information indicates one of at least one minimum K2 configured for the currently activated uplink BWP of the terminal device;

when the downlink control information indicates the terminal device to switch an activated downlink BWP from the currently activated downlink BWP to a to-be-activated downlink BWP, the indication information indicates one of at least one minimum K0 configured for the to-be-activated downlink BWP; and
when the downlink control information indicates the terminal device to switch an activated uplink BWP from the currently activated uplink BWP to a to-be-activated uplink BWP, the indication information indicates one of at least one minimum K2 configured for the to-be-activated uplink BWP.

In a possible design, the processing unit 902 is further configured to: when the indication information indicates one of the at least one minimum K0 configured for the downlink BWP of the terminal device, determine that the minimum K0 indicated by the indication information is a valid minimum K0 of the downlink BWP of the terminal device, and determine that a minimum K2 that is in the at least one minimum K2 configured for the uplink BWP of the terminal device and that corresponds to the valid minimum K0 is a valid minimum K2 of the uplink BWP; or when the indication information indicates one of the at least one minimum K2 configured for the uplink BWP of the terminal device, determine that the minimum K2 indicated by the indication information is a valid minimum K2 of the uplink BWP of the terminal device, and determine that a minimum K0 that is in the at least one minimum K0 configured for the downlink BWP of the terminal device and that corresponds to the valid minimum K2 is a valid minimum K0 of the downlink BWP.

In another possible embodiment, the processing unit 902 is configured to generate downlink control information, where the downlink control information includes indication information, and the indication information indicates one of at least one combination of a minimum K0 and a minimum K2 that is configured for a downlink BWP or an uplink BWP of the terminal device; where at least one combination of the minimum K0 and the minimum K2 is configured for at least one downlink BWP of the terminal device, and/or at least one combination of the minimum K0 and the minimum K2 is configured for at least one uplink BWP of the terminal device; and the transceiver unit 903 is configured to send the downlink control information to the terminal device.

In a possible design, the at least one combination of the minimum K0 and the minimum K2 is configured for the at least one downlink BWP of the terminal device;

when the downlink control information does not indicate the terminal device to switch a currently activated downlink BWP, the indication information indicates one of at least one combination of a minimum K0 and a minimum K2 that is configured for the currently activated downlink BWP of the terminal device; and
when the downlink control information indicates the terminal device to switch an activated downlink BWP from the currently activated downlink BWP to a to-be-activated downlink BWP, the indication information indicates one of at least one combination of a minimum K0 and a minimum K2 that is configured for the to-be-activated downlink BWP.

In a possible design, the at least one combination of the minimum K0 and the minimum K2 is configured for the at least one uplink BWP of the terminal device;

when the downlink control information does not indicate the terminal device to switch a currently activated uplink BWP, the indication information indicates one of at least one combination of a minimum K0 and a minimum K2 that is configured for the currently activated uplink BWP of the terminal device; and
when the downlink control information indicates the terminal device to switch an activated uplink BWP from the currently activated uplink BWP to a to-be-activated uplink BWP, the indication information indicates one of at least one combination of a minimum K0 and a minimum K2 that is configured for the to-be-activated uplink BWP.

In a possible design, the at least one combination of the minimum K0 and the minimum K2 is configured for the at least one downlink BWP of the terminal device, and the at least one combination of the minimum K0 and the minimum K2 is configured for the at least one uplink BWP of the terminal device;

when the downlink control information does not indicate the terminal device to switch a currently activated downlink BWP and uplink BWP, if the downlink control information is for scheduling downlink data, the indication information indicates one of at least one combination of a minimum K0 and a minimum K2 that is configured for the currently activated downlink BWP of the terminal device; and if the downlink control information is for scheduling uplink data, the indication information indicates one of at least one combination of a minimum K0 and a minimum K2 that is configured for the currently activated uplink BWP of the terminal device;
when the downlink control information indicates the terminal device to switch an activated downlink BWP from the currently activated downlink BWP to a to-be-activated downlink BWP, the indication information indicates one of at least one combination of a minimum K0 and a minimum K2 that is configured for the to-be-activated downlink BWP; and
when the downlink control information indicates the terminal device to switch an activated uplink BWP from the currently activated uplink BWP to a to-be-activated uplink BWP, the indication information indicates one of at least one combination of a minimum K0 and a minimum K2 that is configured for the to-be-activated uplink BWP.

In a possible design, the processing unit 902 is further configured to: when the indication information indicates one of the at least one combination of the minimum K0 and the minimum K2 that is configured for the downlink BWP of the terminal device, determine that the minimum K0 indicated by the indication information is a valid minimum K0 of the downlink BWP of the terminal device, and determine that a minimum K2 that is the same as or similar to the minimum K2 indicated by the indication information and that is in the at least one combination of the minimum K0 and the minimum K2 that is configured for the uplink BWP of the terminal device is a valid minimum K2 of the uplink BWP of the terminal device; or
when the indication information indicates one of the at least one combination of the minimum K2 and the minimum K0 that is configured for the uplink BWP of the terminal device, determine that the minimum K2 indicated by the indication information is a valid minimum K2 of the uplink BWP of the terminal device, and determine that a minimum K0 that is the same as or similar to the minimum K0 indicated by the indication information and that is in the at least one combination of the minimum K0 and the minimum K2 that is configured for the downlink BWP of the terminal device is a valid minimum K0 of the downlink BWP of the terminal device.

In still another possible embodiment, the processing unit 902 is configured to generate downlink control information, where the downlink control information includes indication information, and the indication information indicates one of at least one combination of a minimum K0 and a minimum K2 that is configured for a pair of a downlink BWP and an uplink BWP of the terminal device; where at least one combination of a minimum K0 and a minimum K2 is configured for at least one pair of a downlink BWP and an uplink BWP of the terminal device; and the transceiver unit 903 is configured to send the downlink control information to the terminal device.

In a possible design, when the downlink control information does not indicate the terminal device to switch a currently activated uplink BWP and downlink BWP, the indication information indicates one of at least one combination of a minimum K0 and a minimum K2 that is configured for a pair of the currently activated downlink BWP and uplink BWP of the terminal device; when the downlink control information indicates the terminal device to switch an activated downlink BWP from the currently activated downlink BWP to a to-be-activated downlink BWP, the indication information indicates one of at least one combination of a minimum K0 and a minimum K2 that is configured for a pair of the to-be-activated downlink BWP and the currently activated uplink BWP of the terminal device; and when the downlink control information indicates the terminal device to switch an activated uplink BWP from the currently activated uplink BWP to a to-be-activated uplink BWP, the indication information indicates one of at least one combination of a minimum K0 and a minimum K2 that is configured for a pair of the currently activated downlink BWP and the to-be-activated uplink BWP of the terminal device. In the foregoing designs, scenarios in which the indication information indicates the valid minimum K0 of the downlink BWP and the valid minimum K2 of the uplink BWP are enriched, and an application scope of the communication method is extended.

As shown in FIG. 10, an embodiment of this application further provides a network device 1000. The network device 1000 includes a processor 1010, a memory 1020, and a transceiver 1030.

In a possible design, the memory 1020 stores an instruction, a program, or data, and the memory 1020 may be configured to implement a function of the storage unit 901 in the foregoing embodiment. The processor 1010 is configured to read the instruction, program, or data stored in the memory 1020. When the instruction or program stored in the memory 1020 is executed, the processor 1010 is configured to perform an operation performed by the processing unit 902 in the foregoing embodiment, and the transceiver 1030 is configured to perform an operation performed by the transceiver unit 903 in the foregoing embodiment.

It should be understood that the apparatus 900 or network device 1000 in the embodiments of this application may correspond to the network device in the communication methods (FIG. 4, FIG. 5, FIG. 6, FIG. 7, and FIG. 8) in the embodiments of this application, and operations and/or functions of the modules in the apparatus 900 or network device 1000 are configured to implement corresponding procedures of the methods in FIG. 4, FIG. 5, FIG. 6, FIG. 7, and FIG. 8. For brevity, details are not described herein again.

When an integrated unit (module) is used, FIG. 11 is a possible example block diagram of a communications apparatus according to an embodiment of this application. The apparatus 1100 may exist in a form of software. The apparatus 1100 may include a processing unit 1102 and a transceiver unit 1103.

In a possible design, the processing unit 1102 is configured to implement a corresponding processing function. The transceiver unit 1103 is configured to support the apparatus 1100 in communicating with another network entity. Optionally, the transceiver unit 1103 may include a receiving unit and/or a sending unit, which are respectively configured to perform a receiving operation and a sending operation. Optionally, the apparatus 1100 may further include a storage unit 1101, configured to store program code and/or data of the apparatus 1100.

The apparatus 1100 may be the terminal device in any one of the foregoing embodiments, or may be a component, such as a chip, disposed in the terminal device. The processing unit 1102 may support the apparatus 1100 in performing actions of the terminal device in the foregoing method examples. Alternatively, the processing unit 1102 mainly performs internal actions of the terminal device in the method examples, and the transceiver unit 1103 may support communication between the apparatus 1100 and a network device.

Specifically, in a possible embodiment, the transceiver unit 1103 is configured to receive downlink control information from the network device, where the downlink control information includes indication information, and the indication information indicates one of at least one minimum K0 configured for a downlink BWP of the communications apparatus, or the indication information indicates one of at least one minimum K2 configured for an uplink BWP of the communications apparatus, where at least one minimum K0 is configured for at least one downlink BWP of the communications apparatus, at least one minimum K2 is configured for at least one uplink BWP of the communications apparatus, and there is a correspondence between the minimum K0 configured for the downlink BWP and the minimum K2 configured for the uplink BWP; and

the processing unit 1102 is configured to determine a valid minimum K0 of the downlink BWP and a valid minimum K2 of the uplink BWP based on the downlink control information.

In a possible design, the correspondence includes:

the minimum K0 configured for the downlink BWP and the minimum K2 configured for the uplink BWP are in a one-to-one correspondence in ascending order of indexes.

In a possible design, when the downlink control information does not indicate the communications apparatus to switch a currently activated downlink BWP and uplink BWP, if the downlink control information is for scheduling downlink data, the indication information indicates one of at least one minimum K0 configured for the currently activated downlink BWP of the communications apparatus; and if the downlink control information is for scheduling uplink data, the indication information indicates one of at least one minimum K2 configured for the currently activated uplink BWP of the communications apparatus;

when the downlink control information indicates the communications apparatus to switch an activated downlink BWP from the currently activated downlink BWP to a to-be-activated downlink BWP, the indication information indicates one of at least one minimum K0 configured for the to-be-activated downlink BWP; and

when the downlink control information indicates the communications apparatus to switch an activated uplink BWP from the currently activated uplink BWP to a to-be-activated uplink BWP, the indication information indicates one of at least one minimum K2 configured for the to-be-activated uplink BWP.

In a possible design, when determining the valid minimum K0 of the downlink BWP and the valid minimum K2 of the uplink BWP based on the downlink control information, the processing unit 1102 is specifically configured to:

when the indication information indicates one of the at least one minimum K0 configured for the downlink BWP of the communications apparatus, determine that the minimum K0 indicated by the indication information is the valid minimum K0 of the downlink BWP of the communications apparatus, and determine that a minimum K2 that is in the at least one minimum K2 configured for the uplink BWP of the communications apparatus and that corresponds to the valid minimum K0 is the valid minimum K2 of the uplink BWP; or

when the indication information indicates one of the at least one minimum K2 configured for the uplink BWP of the communications apparatus, determine that the minimum K2 indicated by the indication information is the valid minimum K2 of the uplink BWP of the communications apparatus, and determine that a minimum K0 that is in the at least one minimum K0 configured for the downlink BWP of the communications apparatus and that corresponds to the valid minimum K2 is the valid minimum K0 of the downlink BWP.

In another possible embodiment, the transceiver unit 1103 is configured to receive downlink control information from the network device, where the downlink control information includes indication information, and the indication information indicates one of at least one combination of a minimum K0 and a minimum K2 that is configured for a downlink BWP or an uplink BWP of the communications apparatus; where at least one combination of a minimum K0 and a minimum K2 is configured for at least one downlink BWP of the communications apparatus, and/or at least one combination of a minimum K0 and a minimum K2 is configured for at least one uplink BWP of the communications apparatus; and the processing unit 1102 is configured to determine a valid minimum K0 of the downlink BWP and a valid minimum K2 of the uplink BWP based on the downlink control information.

In a possible design, the at least one combination of the minimum K0 and the minimum K2 is configured for the at least one downlink BWP of the communications apparatus;

when the downlink control information does not indicate the communications apparatus to switch a currently activated downlink BWP, the indication information indicates one of at least one combination of a minimum K0 and a minimum K2 that is configured for the currently activated downlink BWP of the communications apparatus; and

when the downlink control information indicates the communications apparatus to switch an activated downlink BWP from the currently activated downlink BWP to a to-be-activated downlink BWP, the indication information indicates one of at least one combination of a minimum K0 and a minimum K2 that is configured for the to-be-activated downlink BWP.

In a possible design, the at least one combination of the minimum K0 and the minimum K2 is configured for the at least one uplink BWP of the communications apparatus;

when the downlink control information does not indicate the communications apparatus to switch a currently activated uplink BWP, the indication information indicates one of at least one combination of a minimum K0 and a minimum K2 that is configured for the currently activated uplink BWP of the communications apparatus; and

when the downlink control information indicates the communications apparatus to switch an activated uplink BWP from the currently activated uplink BWP to a to-be-activated uplink BWP, the indication information indicates one of at least one combination of a minimum K0 and a minimum K2 that is configured for the to-be-activated uplink BWP.

In a possible design, the at least one combination of the minimum K0 and the minimum K2 is configured for the at least one downlink BWP of the communications apparatus, and the at least one combination of the minimum K0 and the minimum K2 is configured for the at least one uplink BWP of the communications apparatus;

when the downlink control information does not indicate the communications apparatus to switch a currently activated downlink BWP and uplink BWP, if the downlink control information is for scheduling downlink data, the indication information indicates one of at least one combination of a minimum K0 and a minimum K2 that is configured for the currently activated downlink BWP of the communications apparatus; and if the downlink control information is for scheduling uplink data, the indication information indicates one of at least one combination of a minimum K0 and a minimum K2 that is configured for the currently activated uplink BWP of the communications apparatus;

when the downlink control information indicates the communications apparatus to switch an activated downlink BWP from the currently activated downlink BWP to a to-be-activated downlink BWP, the indication information indicates one of at least one combination of a minimum K0 and a minimum K2 that is configured for the to-be-activated downlink BWP; and

when the downlink control information indicates the communications apparatus to switch an activated uplink BWP from the currently activated uplink BWP to a to-be-activated uplink BWP, the indication information indicates one of at least one combination of a minimum K0 and a minimum K2 that is configured for the to-be-activated uplink BWP.

In a possible design, when determining the valid minimum K0 of the downlink BWP and the valid minimum K2 of the uplink BWP based on the downlink control information, the processing unit 1102 is specifically configured to: when the indication information indicates one of the at least one combination of the minimum K0 and the minimum K2 that is configured for the downlink BWP of the communications apparatus, determine that the minimum K0 indicated by the indication information is the valid minimum K0 of the downlink BWP of the communications apparatus, and determine that a minimum K2 that is the same as or similar to the minimum K2 indicated by the indication information and that is in the at least one combination of the minimum K0 and the minimum K2 that is configured for the uplink BWP of the communications apparatus is the valid minimum K2 of the uplink BWP of the communications apparatus; or

when the indication information indicates one of the at least one combination of the minimum K0 and the minimum K2 that is configured for the uplink BWP of the communications apparatus, determine that the minimum K2 indicated by the indication information is the valid minimum K2 of the uplink BWP of the communications apparatus, and determine that a minimum K0 that is the same as or similar to the minimum K0 indicated by the indication information and that is in the at least one combination of the minimum K0 and the minimum K2 that is configured for the downlink BWP of the communications apparatus is the valid minimum K0 of the downlink BWP of the communications apparatus.

In still another possible embodiment, the transceiver unit 1103 is configured to receive downlink control information from the network device, where the downlink control information includes indication information, and the indication information indicates one of at least one combination of a minimum K0 and a minimum K2 that is configured for a pair of a downlink BWP and an uplink BWP of the communications apparatus; where at least one combination of a minimum K0 and a minimum K2 is configured for at least one pair of a downlink BWP and an uplink BWP of the communications apparatus; and

the processing unit 1102 is configured to determine a valid minimum K0 of the downlink BWP and a valid minimum K2 of the uplink BWP based on the downlink control information.

In a possible design, when the downlink control information does not indicate the communications apparatus to switch a currently activated uplink BWP and downlink BWP, the indication information indicates one of at least one combination of a minimum K0 and a minimum K2 that is configured for a pair of the currently activated downlink BWP and uplink BWP of the communications apparatus; when the downlink control information indicates the communications apparatus to switch an activated downlink BWP from the currently activated downlink BWP to a to-be-activated downlink BWP, the indication information indicates one of at least one combination of a minimum K0 and a minimum K2 that is configured for a pair of the to-be-activated downlink BWP and the currently activated uplink BWP of the communications apparatus; when the downlink control information indicates the communications apparatus to switch an activated uplink BWP from the currently activated uplink BWP to a to-be-activated uplink BWP, the indication information indicates one of at least one combination of a minimum K0 and a minimum K2 that is configured for a pair of the currently activated downlink BWP and the to-be-activated uplink BWP of the communications apparatus.

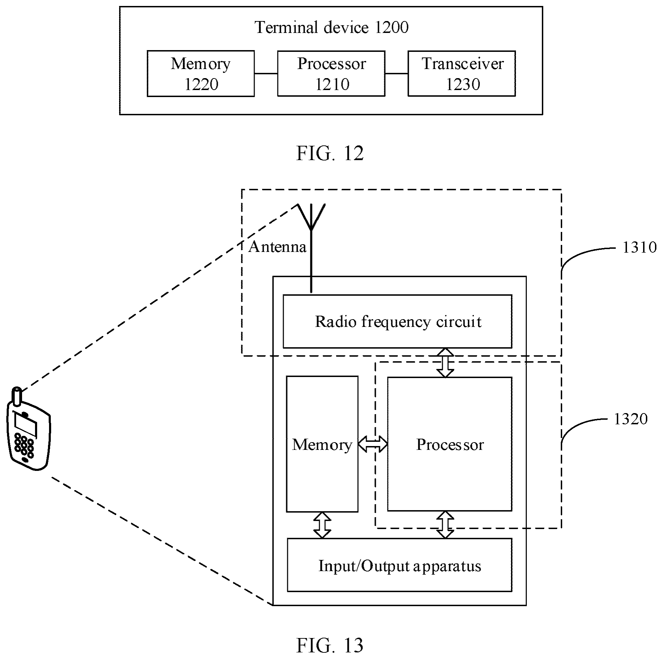

As shown in FIG. 12, an embodiment of this application further provides a terminal device 1200. The terminal device 1200 includes a processor 1210, a memory 1220, and a transceiver 1230.

In a possible design, the memory 1220 stores an instruction, a program, or data, and the memory 1220 may be configured to implement a function of the storage unit 1101 in the foregoing embodiment. The processor 1210 is configured to read the instruction, program, or data stored in the memory 1220. When the instruction or program stored in the memory 1220 is executed, the processor 1210 is configured to perform an operation performed by the processing unit 1102 in the foregoing embodiment, and the transceiver 1230 is configured to perform an operation performed by the transceiver unit 1103 in the foregoing embodiment.

It should be understood that the apparatus 1100 or terminal device 1200 in the embodiments of this application may correspond to the terminal device in the communication methods (FIG. 4, FIG. 5, FIG. 6, FIG. 7, and FIG. 8) in the embodiments of this application, and operations and/or functions of the modules in the apparatus 1100 or terminal device 1200 are configured to implement corresponding procedures of the methods in FIG. 4, FIG. 5, FIG. 6, FIG. 7, and FIG. 8. For brevity, details are not described herein again.

An embodiment of this application further provides a communications apparatus, and the communications apparatus may be a terminal device or a circuit. The communications apparatus may be configured to perform an action performed by the terminal device in the foregoing method embodiments.

When the communications apparatus is a terminal device, FIG. 13 is a simplified schematic structural diagram of the terminal device. For ease of understanding and illustration, an example in which the terminal device is a mobile phone is used in FIG. 13. As shown in FIG. 13, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data entered by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to outside in a form of an electromagnetic wave by using the antenna. When data is sent to the terminal device, the radio frequency circuit receives a radio frequency signal by using the antenna, converts the radio frequency signal into a baseband signal, and outputs the baseband signal to the processor. The processor converts the baseband signal into data, and processes the data. For ease of description, FIG. 13 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have receiving and sending functions may be considered as a transceiver unit (or a communications unit) of the terminal device, and the processor having a processing function may be considered as a processing unit of the terminal device. As shown in FIG. 13, the terminal device includes a transceiver unit 1310 and a processing unit 1320. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 1310 and configured to implement the receiving function may be considered as a receiving unit, and a component that is in the transceiver unit 1310 and configured to implement the sending function may be considered as a sending unit. In other words, the transceiver unit 1310 includes a receiving unit and a sending unit. The transceiver unit may also be sometimes referred to as a transceiver, a transceiver machine, a transceiver circuit, or the like. The receiving unit may also be sometimes referred to as a receiver, a receiver machine, a receiver circuit, or the like. The sending unit may also be sometimes referred to as a transmitter, a transmitter machine, a transmitter circuit, or the like.

It should be understood that the transceiver unit 1310 is configured to perform a sending operation and a receiving operation on a terminal device side in the foregoing method embodiments, and the processing unit 1320 is configured to perform an operation other than the receiving operation and the sending operation of the terminal device in the foregoing method embodiments.

When the communications apparatus is a chip apparatus or circuit, the apparatus may include a transceiver unit and a processing unit. The transceiver unit may be an input/output circuit and/or a communications interface. The processing unit is an integrated processor, a microprocessor, or an integrated circuit.

In another form of this embodiment, a computer-readable storage medium is provided. The computer-readable storage medium stores an instruction. When the instruction is executed, the methods on the terminal device side in the foregoing method embodiments may be performed.

In another form of this embodiment, a computer program product that includes an instruction is provided. When the instruction is executed, the methods on the terminal device side in the foregoing method embodiments may be performed.

In another form of this embodiment, a chip is provided. The chip is coupled to a memory, and is configured to read and execute an instruction stored in the memory. When the instruction is executed, the methods on the terminal device side in the foregoing method embodiments may be performed.

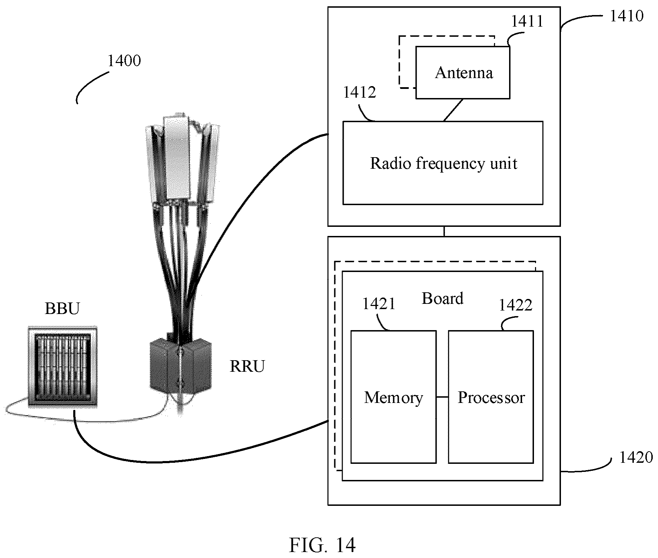

When the apparatus in this embodiment is a network device, the network device may be shown in FIG. 14. An apparatus 1400 includes one or more radio frequency units, such as a remote radio unit (remote radio unit, RRU) 1410 and one or more baseband units (baseband unit, BBU) (which may also be referred to as a digital unit (digital unit, DU)) 1420. The RRU 1410 may be referred to as a transceiver unit, and corresponds to the transceiver unit 903 in FIG. 9. Optionally, the transceiver unit may also be referred to as a transceiver machine, a transceiver circuit, a transceiver, or the like, and may include at least one antenna 1411 and a radio frequency unit 1412. The RRU 1410 is mainly configured to: receive and send a radio frequency signal, and perform conversion between the radio frequency signal and a baseband signal. For example, the RRU 1410 is configured to send configuration information to a terminal device. The BBU 1420 is mainly configured to perform baseband processing, control a base station, and so on. The RRU 1410 and the BBU 1420 may be physically disposed together, or may be physically separated, namely, a distributed base station.

The BBU 1420 is a control center of the base station, and may also be referred to as a processing module. The BBU 1420 may correspond to the processing unit 902 in FIG. 9, and is mainly configured to implement a baseband processing function such as channel coding, multiplexing, modulation, or spreading. For example, the BBU (the processing module) may be configured to control the base station to perform an operation procedure related to the network device in the foregoing method embodiments, for example, generate the foregoing indication information.

In an example, the BBU 1420 may include one or more boards, and a plurality of boards may jointly support a radio access network (such as an LTE network) having a single access standard, or may separately support radio access networks (for example, an LTE network, a 5G network, or another network) having different access standards. The BBU 1420 further includes a memory 1421 and a processor 1422. The memory 1421 is configured to store a necessary instruction and necessary data. The processor 1422 is configured to control the base station to perform a necessary action, for example, is configured to control the base station to perform an operation procedure related to the network device in the foregoing method embodiments. The memory 1421 and the processor 1422 may serve the one or more boards. In other words, the memory and the processor may be independently disposed on each board. Alternatively, the plurality of boards may share the same memory and the same processor. In addition, each board may further be provided with a necessary circuit.

In another form of this embodiment, a computer-readable storage medium is provided. The computer-readable storage medium stores an instruction. When the instruction is executed, the methods on a network device side in the foregoing method embodiments may be performed.

In another form of this embodiment, a computer program product that includes an instruction is provided. When the instruction is executed, the methods on the network device side in the foregoing method embodiments may be performed.

In another form of this embodiment, a chip is provided. The chip is coupled to a memory, and is configured to read and execute an instruction stored in the memory. When the instruction is executed, the methods on the network device side in the foregoing method embodiments may be performed.

In an implementation process, the steps of the methods in the embodiments may be performed by using a hardware integrated logical circuit in the processor, or by using instructions in a form of software. The steps of the methods disclosed with reference to the embodiments of this application may be directly performed by a hardware processor, or may be performed by a combination of hardware and software modules in the processor.

It should be noted that, the processor in the embodiments of this application may be an integrated circuit chip, and has a signal processing capability. In an implementation process, the steps in the foregoing method embodiments may be performed by using a hardware integrated logical circuit in the processor, or by using instructions in a form of software. The processor may be a general-purpose central processing unit (central processing unit, CPU), a general-purpose processor, digital signal processing (digital signal processing, DSP), an application-specific integrated circuit (application specific integrated circuits, ASIC), a field programmable gate array (field programmable gate array, FPGA), another programmable logic device, a transistor logic device, a hardware component, or any combination thereof; or may be a combination of processors implementing a computing function, for example, a combination of one or more microprocessors or a combination of a DSP and a microprocessor. The general-purpose processor may be a microprocessor, or the processor may be any conventional processor or the like.

It may be understood that the memory or the storage unit in the embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example descriptions rather than limitative descriptions, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories in the systems and methods described in this specification include but are not limited to these memories and any memory of another proper type.

All or some of the foregoing embodiments may be implemented by using software, hardware, firmware, or any combination thereof. When being implemented by using the software, all or some of the embodiments may be implemented in a form of a computer program product. The computer program product includes one or more computer programs or instructions. When the computer program or instruction is loaded and executed on a computer, the procedures or functions in the embodiments of this application are all or partially performed. The computer may be a general-purpose computer, a dedicated computer, a computer network, or another programmable apparatus. The computer program or instruction may be stored in a computer-readable storage medium, or may be transmitted by using the computer-readable storage medium. The computer-readable storage medium may be any usable medium accessible by a computer, or a data storage device, such as a server integrating one or more usable media. The usable medium may be a magnetic medium, for example, a floppy disk, a hard disk, or a magnetic tape; or may be an optical medium, for example, a DVD; or may be a semiconductor medium, for example, a solid-state drive (solid state disk, SSD).

The various illustrative logical units and circuits described in the embodiments of this application may implement or operate the described functions by using a general-purpose processor, a digital signal processor, an application-specific integrated circuit (ASIC), a field programmable gate array (FPGA), another programmable logical apparatus, a discrete gate, a transistor logic, a discrete hardware component, or a design of any combination thereof. The general-purpose processor may be a microprocessor. Optionally, the general-purpose processor may alternatively be any conventional processor, a controller, a microcontroller, or a state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in the embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, a storage medium may connect to a processor, so that the processor may read information from the storage medium and write information to the storage medium. Optionally, the storage medium may further be integrated into a processor. The processor and the storage medium may be disposed in an ASIC, and the ASIC may be disposed in a terminal device. Optionally, the processor and the storage medium may alternatively be disposed in different components of a terminal device.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Further embodiments of the present invention are provided in the following. It should be noted that the numbering used in the following section does not necessarily need to comply with the numbering used in the previous sections.

Embodiment 1. A communication method, comprising:

sending, by a network device, downlink control information to a terminal device, wherein the downlink control information comprises indication information, and the indication information indicates one of at least one minimum applicable slot offset minimum K0 that is of a physical downlink shared channel and that is configured for a downlink bandwidth part BWP of the terminal device, or the indication information indicates one of at least one minimum applicable slot offset minimum K2 that is of a physical uplink shared channel and that is configured for an uplink BWP of the terminal device, wherein at least one minimum K0 is configured for at least one downlink BWP of the terminal device, at least one minimum K2 is configured for at least one uplink BWP of the terminal device, and there is a correspondence between the minimum K0 configured for the downlink BWP and the minimum K2 configured for the uplink BWP.

Embodiment 2. The method according to embodiment 1, wherein the correspondence comprises:

the minimum K0 configured for the downlink BWP and the minimum K2 configured for the uplink BWP are in a one-to-one correspondence in ascending order of indexes.

Embodiment 3. The method according to embodiment 1, wherein when the downlink control information does not indicate the terminal device to switch a currently activated downlink BWP and uplink BWP, if the downlink control information is for scheduling downlink data, the indication information indicates one of at least one minimum K0 configured for the currently activated downlink BWP of the terminal device; and if the downlink control information is for scheduling uplink data, the indication information indicates one of at least one minimum K2 configured for the currently activated uplink BWP of the terminal device;

when the downlink control information indicates the terminal device to switch an activated downlink BWP from the currently activated downlink BWP to a to-be-activated downlink BWP, the indication information indicates one of at least one minimum K0 configured for the to-be-activated downlink BWP; or

when the downlink control information indicates the terminal device to switch an activated uplink BWP from the currently activated uplink BWP to a to-be-activated uplink BWP, the indication information indicates one of at least one minimum K2 configured for the to-be-activated uplink BWP.

Embodiment 4. The method according to any one of embodiments 1 to 3, wherein the method further comprises:

when the indication information indicates one of the at least one minimum K0 configured for the downlink BWP of the terminal device, determining, by the network device, that the minimum K0 indicated by the indication information is a valid minimum K0 of the downlink BWP of the terminal device, and determining that a minimum K2 that is in the at least one minimum K2 configured for the uplink BWP of the terminal device and that corresponds to the valid minimum K0 is a valid minimum K2 of the uplink BWP; or

when the indication information indicates one of the at least one minimum K2 configured for the uplink BWP of the terminal device, determining, by the network device, that the minimum K2 indicated by the indication information is a valid minimum K2 of the uplink BWP of the terminal device, and determining that a minimum K0 that is in the at least one minimum K0 configured for the downlink BWP of the terminal device and that corresponds to the valid minimum K2 is a valid minimum K0 of the downlink BWP.

Embodiment 5. A communication method, comprising:

sending, by a network device, downlink control information to a terminal device, wherein the downlink control information comprises indication information, and the indication information indicates one of at least one combination that is of a minimum applicable slot offset minimum K0 of a physical downlink shared channel and a minimum applicable slot offset minimum K2 of a physical uplink shared channel and that is configured for a downlink bandwidth part BWP or an uplink BWP of the terminal device; wherein at least one combination of a minimum K0 and a minimum K2 is configured for at least one downlink BWP of the terminal device, and/or at least one combination of a minimum K0 and a minimum K2 is configured for at least one uplink BWP of the terminal device.

Embodiment 6. The method according to embodiment 5, wherein the at least one combination of the minimum K0 and the minimum K2 is configured for the at least one downlink BWP of the terminal device;

when the downlink control information does not indicate the terminal device to switch a currently activated downlink BWP, the indication information indicates one of at least one combination of a minimum K0 and a minimum K2 that is configured for the currently activated downlink BWP of the terminal device; and

when the downlink control information indicates the terminal device to switch an activated downlink BWP from the currently activated downlink BWP to a to-be-activated downlink BWP, the indication information indicates one of at least one combination of a minimum K0 and a minimum K2 that is configured for the to-be-activated downlink BWP.

Embodiment 7. The method according to embodiment 5, wherein the at least one combination of the minimum K0 and the minimum K2 is configured for the at least one uplink BWP of the terminal device;

when the downlink control information does not indicate the terminal device to switch a currently activated uplink BWP, the indication information indicates one of at least one combination of a minimum K0 and a minimum K2 that is configured for the currently activated uplink BWP of the terminal device; and

when the downlink control information indicates the terminal device to switch an activated uplink BWP from the currently activated uplink BWP to a to-be-activated uplink BWP, the indication information indicates one of at least one combination of a minimum K0 and a minimum K2 that is configured for the to-be-activated uplink BWP.

Embodiment 8. The method according to embodiment 5, wherein the at least one combination of the minimum K0 and the minimum K2 is configured for the at least one downlink BWP of the terminal device, and the at least one combination of the minimum K0 and the minimum K2 is configured for the at least one uplink BWP of the terminal device;

when the downlink control information does not indicate the terminal device to switch a currently activated downlink BWP and uplink BWP, if the downlink control information is for scheduling downlink data, the indication information indicates one of at least one combination of a minimum K0 and a minimum K2 that is configured for the currently activated downlink BWP of the terminal device; and if the downlink control information is for scheduling uplink data, the indication information indicates one of at least one combination of a minimum K0 and a minimum K2 that is configured for the currently activated uplink BWP of the terminal device;

when the downlink control information indicates the terminal device to switch an activated downlink BWP from the currently activated downlink BWP to a to-be-activated downlink BWP, the indication information indicates one of at least one combination of a minimum K0 and a minimum K2 that is configured for the to-be-activated downlink BWP; and

when the downlink control information indicates the terminal device to switch an activated uplink BWP from the currently activated uplink BWP to a to-be-activated uplink BWP, the indication information indicates one of at least one combination of a minimum K0 and a minimum K2 that is configured for the to-be-activated uplink BWP.

Embodiment 9. The method according to embodiment 8, wherein after the sending, by a network device, downlink control information to a terminal device, the method further comprises:

when the indication information indicates one of the at least one combination of the minimum K0 and the minimum K2 that is configured for the downlink BWP of the terminal device, determining, by the network device, that the minimum K0 indicated by the indication information is a valid minimum K0 of the downlink BWP of the terminal device, and determining that a minimum K2 that is the same as or similar to the minimum K2 indicated by the indication information and that is in the at least one combination of the minimum K0 and the minimum K2 that is configured for the uplink BWP of the terminal device is a valid minimum K2 of the uplink BWP of the terminal device; or

when the indication information indicates one of the at least one combination of the minimum K2 and the minimum K0 that is configured for the uplink BWP of the terminal device, determining, by the network device, that the minimum K2 indicated by the indication information is a valid minimum K2 of the uplink BWP of the terminal device, and determining that a minimum K0 that is the same as or similar to the minimum K0 indicated by the indication information and that is in the at least one combination of the minimum K0 and the minimum K2 that is configured for the downlink BWP of the terminal device is a valid minimum K0 of the downlink BWP of the terminal device.

Embodiment 10. A communication method, comprising:

receiving, by a terminal device, downlink control information from a network device, wherein the downlink control information comprises indication information, and the indication information indicates one of at least one minimum applicable slot offset minimum K0 that is of a physical downlink shared channel and that is configured for a downlink bandwidth part BWP of the terminal device, or the indication information indicates one of at least one minimum applicable slot offset minimum K2 that is of a physical uplink shared channel and that is configured for an uplink BWP of the terminal device, wherein at least one minimum K0 is configured for at least one downlink BWP of the terminal device, at least one minimum K2 is configured for at least one uplink BWP of the terminal device, and there is a correspondence between the minimum K0 configured for the downlink BWP and the minimum K2 configured for the uplink BWP; and

determining, by the terminal device, a valid minimum K0 of the downlink BWP and a valid minimum K2 of the uplink BWP based on the downlink control information.

Embodiment 11. The method according to embodiment 10, wherein the correspondence comprises: the minimum K0 configured for the downlink BWP and the minimum K2 configured for the uplink BWP are in a one-to-one correspondence in ascending order of indexes.

Embodiment 12. The method according to embodiment 10, wherein when the downlink control information does not indicate the terminal device to switch a currently activated downlink BWP and uplink BWP, if the downlink control information is for scheduling downlink data, the indication information indicates one of at least one minimum K0 configured for the currently activated downlink BWP of the terminal device; and if the downlink control information is for scheduling uplink data, the indication information indicates one of at least one minimum K2 configured for the currently activated uplink BWP of the terminal device;

when the downlink control information indicates the terminal device to switch an activated downlink BWP from the currently activated downlink BWP to a to-be-activated downlink BWP, the indication information indicates one of at least one minimum K0 configured for the to-be-activated downlink BWP; or

when the downlink control information indicates the terminal device to switch an activated uplink BWP from the currently activated uplink BWP to a to-be-activated uplink BWP, the indication information indicates one of at least one minimum K2 configured for the to-be-activated uplink BWP.

Embodiment 13. The method according to any one of embodiments 10 to 12, wherein the determining, by the terminal device, a valid minimum K0 of the downlink BWP and a valid minimum K2 of the uplink BWP based on the downlink control information comprises:

when the indication information indicates one of the at least one minimum K0 configured for the downlink BWP of the terminal device, determining, by the terminal device, that the minimum K0 indicated by the indication information is the valid minimum K0 of the downlink BWP of the terminal device, and determining that a minimum K2 that is in the at least one minimum K2 configured for the uplink BWP of the terminal device and that corresponds to the valid minimum K0 is the valid minimum K2 of the uplink BWP; or
when the indication information indicates one of the at least one minimum K2 configured for the uplink BWP of the terminal device, determining, by the terminal device, that the minimum K2 indicated by the indication information is the valid minimum K2 of the uplink BWP of the terminal device, and determining that a minimum K0 that is in the at least one minimum K0 configured for the downlink BWP of the terminal device and that corresponds to the valid minimum K2 is the valid minimum K0 of the downlink BWP.

Embodiment 14. A communication method, comprising:

receiving, by a terminal device, downlink control information from a network device, wherein the downlink control information comprises indication information, and the indication information indicates one of at least one combination that is of a minimum applicable slot offset minimum K0 of a physical downlink shared channel and a minimum applicable slot offset minimum K2 of a physical uplink shared channel and that is configured for a downlink bandwidth part BWP or an uplink BWP of the terminal device; wherein at least one combination of a minimum K0 and a minimum K2 is configured for at least one downlink BWP of the terminal device, and/or at least one combination of a minimum K0 and a minimum K2 is configured for at least one uplink BWP of the terminal device; and
determining, by the terminal device, a valid minimum K0 of the downlink BWP and a valid minimum K2 of the uplink BWP based on the downlink control information.

Embodiment 15. The method according to embodiment 14, wherein at least one combination of a minimum K0 and a minimum K2 is configured for at least one downlink BWP of the terminal device;

when the downlink control information does not indicate the terminal device to switch a currently activated downlink BWP, the indication information indicates one of at least one combination of a minimum K0 and a minimum K2 that is configured for the currently activated downlink BWP of the terminal device; and
when the downlink control information indicates the terminal device to switch an activated downlink BWP from the currently activated downlink BWP to a to-be-activated downlink BWP, the indication information indicates one of at least one combination of a minimum K0 and a minimum K2 that is configured for the to-be-activated downlink BWP.

Embodiment 16. The method according to embodiment 14, wherein the at least one combination of the minimum K0 and the minimum K2 is configured for the at least one uplink BWP of the terminal device;

when the downlink control information does not indicate the terminal device to switch a currently activated uplink BWP, the indication information indicates one of at least one combination of a minimum K0 and a minimum K2 that is configured for the currently activated uplink BWP of the terminal device; and
when the downlink control information indicates the terminal device to switch an activated uplink BWP from the currently activated uplink BWP to a to-be-activated uplink BWP, the indication information indicates one of at least one combination of a minimum K0 and a minimum K2 that is configured for the to-be-activated uplink BWP.

Embodiment 17. The method according to embodiment 14, wherein the at least one combination of the minimum K0 and the minimum K2 is configured for the at least one downlink BWP of the terminal device, and the at least one combination of the minimum K0 and the minimum K2 is configured for the at least one uplink BWP of the terminal device;

when the downlink control information does not indicate the terminal device to switch a currently activated downlink BWP and uplink BWP, if the downlink control information is for scheduling downlink data, the indication information indicates one of at least one combination of a minimum K0 and a minimum K2 that is configured for the currently activated downlink BWP of the terminal device; and if the downlink control information is for scheduling uplink data, the indication information indicates one of at least one combination of a minimum K0 and a minimum K2 that is configured for the currently activated uplink BWP of the terminal device;

when the downlink control information indicates the terminal device to switch an activated downlink BWP from the currently activated downlink BWP to a to-be-activated downlink BWP, the indication information indicates one of at least one combination of a minimum K0 and a minimum K2 that is configured for the to-be-activated downlink BWP; and

when the downlink control information indicates the terminal device to switch an activated uplink BWP from the currently activated uplink BWP to a to-be-activated uplink BWP, the indication information indicates one of at least one combination of a minimum K0 and a minimum K2 that is configured for the to-be-activated uplink BWP.

Embodiment 18. The method according to embodiment 17, wherein the determining, by the terminal device, a valid minimum K0 of the downlink BWP and a valid minimum K2 of the uplink BWP based on the downlink control information comprises:

when the indication information indicates one of the at least one combination of the minimum K0 and the minimum K2 that is configured for the downlink BWP of the terminal device, determining, by the terminal device, that the minimum K0 indicated by the indication information is the valid minimum K0 of the downlink BWP of the terminal device, and determining that a minimum K2 that is the same as or similar to the minimum K2 indicated by the indication information and that is in the at least one combination of the minimum K0 and the minimum K2 that is configured for the uplink BWP of the terminal device is the valid minimum K2 of the uplink BWP of the terminal device; or

when the indication information indicates one of the at least one combination of the minimum K2 and the minimum K0 that is configured for the uplink BWP of the terminal device, determining, by the terminal device, that the minimum K2 indicated by the indication information is the valid minimum K2 of the uplink BWP of the terminal device, and determining that a minimum K0 that is the same as or similar to the minimum K0 indicated by the indication information and that is in the at least one combination of the minimum K0 and the minimum K2 that is configured for the downlink BWP of the terminal device is the valid minimum K0 of the downlink BWP of the terminal device.

Embodiment 19. A communications apparatus, comprising:

a processing unit, configured to generate downlink control information, wherein the downlink control information comprises indication information, and the indication information indicates one of at least one minimum applicable slot offset minimum K0 that is of a physical downlink shared channel and that is configured for a downlink bandwidth part BWP of a terminal device, or the indication information indicates one of at least one minimum applicable slot offset minimum K2 that is of a physical uplink shared channel and that is configured for an uplink BWP of a terminal device, wherein at least one minimum K0 is configured for at least one downlink BWP of the terminal device, at least one minimum K2 is configured for at least one uplink BWP of the terminal device, and there is a correspondence between the minimum K0 configured for the downlink BWP and the minimum K2 configured for the uplink BWP;

a transceiver unit, configured to send the downlink control information to the terminal device.

Embodiment 20. The communications apparatus according to embodiment 19, wherein the correspondence comprises:
the minimum K0 configured for the downlink BWP and the minimum K2 configured for the uplink BWP are in a one-to-one correspondence in ascending order of indexes.

Embodiment 21. The communications apparatus according to embodiment 19, wherein when the downlink control information does not indicate the terminal device to switch a currently activated downlink BWP and uplink BWP, if the downlink control information is for scheduling downlink data, the indication information indicates one of at least one minimum K0 configured for the currently activated downlink BWP of the terminal device; and if the downlink control information is for scheduling uplink data, the indication information indicates one of at least one minimum K2 configured for the currently activated uplink BWP of the terminal device;

when the downlink control information indicates the terminal device to switch an activated downlink BWP from the currently activated downlink BWP to a to-be-activated downlink BWP, the indication information indicates one of at least one minimum K0 configured for the to-be-activated downlink BWP; and

when the downlink control information indicates the terminal device to switch an activated uplink BWP from the currently activated uplink BWP to a to-be-activated uplink BWP, the indication information indicates one of at least one minimum K2 configured for the to-be-activated uplink BWP.

Embodiment 22. The communications apparatus according to any one of embodiments 19 to 21, wherein the processing unit is further configured to: when the indication information indicates one of the at least one minimum K0 configured for the downlink BWP of the terminal device, determine that the minimum K0 indicated by the indication information is a valid minimum K0 of the downlink BWP of the terminal device, and determine that a minimum K2 that is in the at least one minimum K2 configured for the uplink BWP of the terminal device and that corresponds to the valid minimum K0 is a valid minimum K2 of the uplink BWP; or when the indication information indicates one of the at least one minimum K2 configured for the uplink BWP of the terminal device, determine that the minimum K2 indicated by the indication information is a valid minimum K2 of the uplink BWP of the terminal device, and determine that a minimum K0 that is in the at least one minimum K0 configured for the downlink BWP of the terminal device and that corresponds to the valid minimum K2 is a valid minimum K0 of the downlink BWP.

Embodiment 23. A communications apparatus, comprising:

a processing unit, configured to generate downlink control information, wherein the downlink control information comprises indication information, and the indication information indicates one of at least one combination that is of a minimum applicable slot offset minimum K0 of a physical downlink shared channel and a minimum applicable slot offset minimum K2 of a physical uplink shared channel and that is configured for a downlink bandwidth part BWP or an uplink BWP of a terminal device; wherein at least one combination of a minimum K0 and a minimum K2 is configured for at least one downlink BWP of the terminal device, and/or at least one combination of a minimum K0 and a minimum K2 is configured for at least one uplink BWP of the terminal device; and
a transceiver unit, configured to send the downlink control information to the terminal device.

Embodiment 24. The communications apparatus according to embodiment 23, wherein the at least one combination of the minimum K0 and the minimum K2 is configured for at least one downlink BWP of the terminal device;

when the downlink control information does not indicate the terminal device to switch a currently activated downlink BWP, the indication information indicates one of at least one combination of a minimum K0 and a minimum K2 that is configured for the currently activated downlink BWP of the terminal device; and
when the downlink control information indicates the terminal device to switch an activated downlink BWP from the currently activated downlink BWP to a to-be-activated downlink BWP, the indication information indicates one of at least one combination of a minimum K0 and a minimum K2 that is configured for the to-be-activated downlink BWP.

Embodiment 25. The communications apparatus according to embodiment 23, wherein at least one combination of a minimum K0 and a minimum K2 is configured for at least one uplink BWP of the terminal device;

when the downlink control information does not indicate the terminal device to switch a currently activated uplink BWP, the indication information indicates one of at least one combination of a minimum K0 and a minimum K2 that is configured for the currently activated uplink BWP of the terminal device; and
when the downlink control information indicates the terminal device to switch an activated uplink BWP from the currently activated uplink BWP to a to-be-activated uplink BWP, the indication information indicates one of at least one combination of a minimum K0 and a minimum K2 that is configured for the to-be-activated uplink BWP.

Embodiment 26. The communications apparatus according to embodiment 23, wherein the at least one combination of the minimum K0 and the minimum K2 is configured for the at least one downlink BWP of the terminal device, and the at least one combination of the minimum K0 and the minimum K2 is configured for the at least one uplink BWP of the terminal device;

when the downlink control information does not indicate the terminal device to switch a currently activated downlink BWP and uplink BWP, if the downlink control information is for scheduling downlink data, the indication information indicates one of at least one combination of a minimum K0 and a minimum K2 that is configured for the currently activated downlink BWP of the terminal device; and if the downlink control information is for scheduling uplink data, the indication information indicates one of at least one combination of a minimum K0 and a minimum K2 that is configured for the currently activated uplink BWP of the terminal device;

when the downlink control information indicates the terminal device to switch an activated downlink BWP from the currently activated downlink BWP to a to-be-activated downlink BWP, the indication information indicates one of at least one combination of a minimum K0 and a minimum K2 that is configured for the to-be-activated downlink BWP; and

when the downlink control information indicates the terminal device to switch an activated uplink BWP from the currently activated uplink BWP to a to-be-activated uplink BWP, the indication information indicates one of at least one combination of a minimum K0 and a minimum K2 that is configured for the to-be-activated uplink BWP.

Embodiment 27. The communications apparatus according to embodiment 26, wherein the processing unit is further configured to: when the indication information indicates one of the at least one combination of the minimum K0 and the minimum K2 that is configured for the downlink BWP of the terminal device, determine that the minimum K0 indicated by the indication information is a valid minimum K0 of the downlink BWP of the terminal device, and determine that a minimum K2 that is the same as or similar to the minimum K2 indicated by the indication information and that is in the at least one combination of the minimum K0 and the minimum K2 that is configured for the uplink BWP of the terminal device is a valid minimum K2 of the uplink BWP of the terminal device; or

when the indication information indicates one of the at least one combination of the minimum K2 and the minimum K0 that is configured for the uplink BWP of the terminal device, determine that the minimum K2 indicated by the indication information is a valid minimum K2 of the uplink BWP of the terminal device, and determine that a minimum K0 that is the same as or similar to the minimum K0 indicated by the indication information and that is in the at least one combination of the minimum K0 and the minimum K2 that is configured for the downlink BWP of the terminal device is a valid minimum K0 of the downlink BWP of the terminal device.

Embodiment 28. A communications apparatus, comprising:

a transceiver unit, configured to receive downlink control information from a network device, wherein the downlink control information comprises indication information, and the indication information indicates one of at least one minimum applicable slot offset minimum K0 that is of a physical downlink shared channel and that is configured for a downlink bandwidth part BWP of the communications apparatus, or the indication information indicates one of at least one minimum applicable slot offset minimum K2 that is of a physical uplink shared channel and that is configured for an uplink BWP of the communications apparatus, wherein at least one minimum K0 is configured for at least one downlink BWP of the communications apparatus, at least one minimum K2 is configured for at least one uplink BWP of the communications apparatus, and there is a correspondence between the minimum K0 configured for the downlink BWP and the minimum K2 configured for the uplink BWP; and

a processing unit, configured to determine a valid minimum K0 of the downlink BWP and a valid minimum K2 of the uplink BWP based on the downlink control information.

Embodiment 29. The communications apparatus according to embodiment 28, wherein the correspondence comprises:

the minimum K0 configured for the downlink BWP and the minimum K2 configured for the uplink BWP are in a one-to-one correspondence in ascending order of indexes.

Embodiment 30. The communications apparatus according to embodiment 28, wherein when the downlink control information does not indicate the communications apparatus to switch a currently activated downlink BWP and uplink BWP, if the downlink control information is for scheduling downlink data, the indication information indicates one of at least one minimum K0 configured for the currently activated downlink BWP of the communications apparatus; and if the downlink control information is for scheduling uplink data, the indication information indicates one of at least one minimum K2 configured for the currently activated uplink BWP of the communications apparatus;

when the downlink control information indicates the communications apparatus to switch an activated downlink BWP from the currently activated downlink BWP to a to-be-activated downlink BWP, the indication information indicates one of at least one minimum K0 configured for the to-be-activated downlink BWP; and

when the downlink control information indicates the communications apparatus to switch an activated uplink BWP from the currently activated uplink BWP to a to-be-activated uplink BWP, the indication information indicates one of at least one minimum K2 configured for the to-be-activated uplink BWP.

Embodiment 31. The communications apparatus according to any one of embodiments 28 to 30, wherein when determining the valid minimum K0 of the downlink BWP and the valid minimum K2 of the uplink BWP based on the downlink control information, the processing unit is specifically configured to:

when the indication information indicates one of the at least one minimum K0 configured for the downlink BWP of the communications apparatus, determine that the minimum K0 indicated by the indication information is the valid minimum K0 of the downlink BWP of the communications apparatus, and determine that a minimum K2 that is in the at least one minimum K2 configured for the uplink BWP of the communications apparatus and that corresponds to the valid minimum K0 is the valid minimum K2 of the uplink BWP; or

when the indication information indicates one of the at least one minimum K2 configured for the uplink BWP of the communications apparatus, determine that the minimum K2 indicated by the indication information is the valid minimum K2 of the uplink BWP of the communications apparatus, and determine that a minimum K0 that is in the at least one minimum K0 configured for the downlink BWP of the communications apparatus and that corresponds to the valid minimum K2 is the valid minimum K0 of the downlink BWP.

Embodiment 32. A communications apparatus, comprising:

a transceiver unit, configured to receive downlink control information from a network device, wherein the downlink control information comprises indication information, and the indication information indicates one of at least one combination that is of a minimum applicable slot offset minimum K0 of a physical downlink shared channel and a minimum applicable slot offset minimum K2 of a physical uplink shared channel and that is configured for a downlink bandwidth part BWP or an uplink BWP of the communications apparatus; wherein at least one combination of a minimum K0 and a minimum K2 is configured for at least one downlink BWP of the communications apparatus, and/or at least one combination of a minimum K0 and a minimum K2 is configured for at least one uplink BWP of the communications apparatus; and

a processing unit, configured to determine a valid minimum K0 of the downlink BWP and a valid minimum K2 of the uplink BWP based on the downlink control information.

Embodiment 33. The communications apparatus according to embodiment 32, wherein at least one combination of a minimum K0 and a minimum K2 is configured for at least one downlink BWP of the communications apparatus;

when the downlink control information does not indicate the communications apparatus to switch a currently activated downlink BWP, the indication information indicates one of at least one combination of a minimum K0 and a minimum K2 that is configured for the currently activated downlink BWP of the communications apparatus; and

when the downlink control information indicates the communications apparatus to switch an activated downlink BWP from the currently activated downlink BWP to a to-be-activated downlink BWP, the indication information indicates one of at least one combination of a minimum K0 and a minimum K2 that is configured for the to-be-activated downlink BWP.

Embodiment 34. The communications apparatus according to embodiment 32, wherein at least one combination of a minimum K0 and a minimum K2 is configured for at least one uplink BWP of the communications apparatus;

when the downlink control information does not indicate the communications apparatus to switch a currently activated uplink BWP, the indication information indicates one of at least one combination of a minimum K0 and a minimum K2 that is configured for the currently activated uplink BWP of the communications apparatus; and

when the downlink control information indicates the communications apparatus to switch an activated uplink BWP from the currently activated uplink BWP to a to-be-activated uplink BWP, the indication information indicates one of at least one combination of a minimum K0 and a minimum K2 that is configured for the to-be-activated uplink BWP.

Embodiment 35. The communications apparatus according to embodiment 32, wherein the at least one combination of the minimum K0 and the minimum K2 is configured for the at least one downlink BWP of the communications apparatus, and the at least one combination of the minimum K0 and the minimum K2 is configured for the at least one uplink BWP of the communications apparatus;

when the downlink control information does not indicate the communications apparatus to switch a currently activated downlink BWP and uplink BWP, if the downlink control information is for scheduling downlink data, the indication information indicates one of at least one combination of a minimum K0 and a minimum K2 that is configured for the currently activated downlink BWP of the communications apparatus; and if the downlink control information is for scheduling uplink data, the indication information indicates one of at least one combination of a minimum K0 and a minimum K2 that is configured for the currently activated uplink BWP of the communications apparatus;

when the downlink control information indicates the communications apparatus to switch an activated downlink BWP from the currently activated downlink BWP to a to-be-activated downlink BWP, the indication information indicates one of at least one combination of a minimum K0 and a minimum K2 that is configured for the to-be-activated downlink BWP; and

when the downlink control information indicates the communications apparatus to switch an activated uplink BWP from the currently activated uplink BWP to a to-be-activated uplink BWP, the indication information indicates one of at least one combination of a minimum K0 and a minimum K2 that is configured for the to-be-activated uplink BWP.

Embodiment 36. The communications apparatus according to embodiment 35, wherein when determining the valid minimum K0 of the downlink BWP and the valid minimum K2 of the uplink BWP based on the downlink control information, the processing unit is specifically configured to: when the indication information indicates one of the at least one combination of the minimum K0 and the minimum K2 that is configured for the downlink BWP of the communications apparatus, determine that the minimum K0 indicated by the indication information is the valid minimum K0 of the downlink BWP of the communications apparatus, and determine that a minimum K2 that is the same as or similar to the minimum K2 indicated by the indication information and that is in the at least one combination of the minimum K0 and the minimum K2 that is configured for the uplink BWP of the communications apparatus is the valid minimum K2 of the uplink BWP of the communications apparatus; or

when the indication information indicates one of the at least one combination of the minimum K0 and the minimum K2 that is configured for the uplink BWP of the communications apparatus, determine that the minimum K2 indicated by the indication information is the valid minimum K2 of the uplink BWP of the communications apparatus, and determine that a minimum K0 that is the same as or similar to the minimum K0 indicated by the indication information and that is in the at least one combination of the minimum K0 and the minimum K2 that is configured for the downlink BWP of the communications apparatus is the valid minimum K0 of the downlink BWP of the communications apparatus.

Embodiment 37. A communications apparatus, comprising a memory and a processor, wherein

the memory is configured to store a computer program; and
the processor is configured to execute the computer program stored in the memory, to enable the communications apparatus to perform the method according to any one of embodiments 1 to 4 or 5 to 9.

Embodiment 38. A communications apparatus, comprising a memory and a processor, wherein

the memory is configured to store a computer program; and
the processor is configured to execute the computer program stored in the memory, to enable the communications apparatus to perform the method according to any one of embodiments 10 to 13 or 14 to 18.

Embodiment 39. A computer-readable storage medium, wherein the computer-readable storage medium comprises a computer program, and when the computer program is read and executed by one or more processors, the method according to any one of embodiments 1 to 4, 5 to 9, 10 to 13, or 14 to 18 is implemented.

Embodiment 40. A chip, wherein the chip is coupled to a memory, and is configured to read and execute a program instruction stored in the memory, to implement the method according to any one of embodiments 1 to 4, 5 to 9, 10 to 13, or 14 to 18.

Although the embodiments of this application are described with reference to specific features, it is clear that various modifications and combinations may be made to them without departing from the spirit and scope of the embodiments of this application. Correspondingly, the specification and accompanying drawings are merely example descriptions of the embodiments of this application that are defined by the appended claims, and are considered to cover any or all of modifications, variations, combinations, or equivalents in the scope of the embodiments of this application.

**Claims**

1. A communication method, comprising:
   sending, by a network device, downlink control information to a terminal device, wherein the downlink control information comprises indication information, and the indication information indicates one of two first minimum applicable slot offsets (minimum KO) that are of a physical downlink shared channel and that are configured for a downlink bandwidth part (BWP) of the terminal device, or the indication information indicates one of two second minimum applicable slot offsets (minimum K2) that are of a physical uplink shared channel and that are configured for an uplink BWP of the terminal device, wherein the two minimum K0 comprise a first value of the two minimum K0 and a second value of the two minimum K0 and are configured for at least one downlink BWP of the terminal device, the two minimum K2 comprise a first value of the two minimum K2 and a second value of the two minimum K2 and are configured for at least one uplink BWP of the terminal device, and wherein:

> the indication information indicates the first value of the two minimum K0 configured for an active downlink BWP of the terminal device and the first value of the two minimum K2 configured for an active uplink BWP of the terminal device, in case that the indication information has a first state value; and
> the indication information indicates the second value of the two minimum K0 configured for the active downlink BWP of the terminal device and the second value of the two minimum K2 configured for the active uplink BWP of the terminal device, in case that the indication information has a second state value.

2. The method according to claim 1, wherein:
   the minimum K0 configured for the downlink BWP and the minimum K2 configured for the uplink BWP are in a one-to-one correspondence in ascending order of indexes.

3. The method according to claim 1 or 2, wherein when the downlink control information does not indicate the terminal device to switch a currently activated downlink BWP and uplink BWP:

   > if the downlink control information is for scheduling downlink data, the indication information indicates the one of the two minimum K0 configured for the currently activated downlink BWP of the terminal device; and
   > if the downlink control information is for scheduling uplink data, the indication information indicates the one of the two minimum K2 configured for the currently activated uplink BWP of the terminal device.

4. The method according to claims 1 or 2, wherein when the downlink control information indicates the terminal device to switch an activated downlink BWP from a currently activated downlink BWP to a to-be-activated downlink BWP, the indication information indicates the one of the two minimum K0 configured for the to-be-activated downlink BWP; or
when the downlink control information indicates the terminal device to switch an activated uplink BWP from a currently activated uplink BWP to a to-be-activated uplink BWP, the indication information indicates the one of the two minimum K2 configured for the to-be-activated uplink BWP.

5. The method according to any one of claims 1 to 4, wherein the method further comprises:

   > when the indication information indicates the one of the two minimum K0 configured for the downlink BWP of the terminal device, determining, by the network device, that the minimum K0 indicated by the indication information is a valid minimum K0 of the downlink BWP of the terminal device, and determining that a minimum K2 that is in the two minimum K2 configured for the uplink BWP of the terminal device and that corresponds to the valid minimum K0 is a valid minimum K2 of the uplink BWP; or
   > when the indication information indicates the one of the two minimum K2 configured for the uplink BWP of the terminal device, determining, by the network device, that the minimum K2 indicated by the indication information is a valid minimum K2 of the uplink BWP of the terminal device, and determining that a minimum K0 that is in the two minimum K0 configured for the downlink BWP of the terminal device and that corresponds to the valid minimum K2 is a valid minimum K0 of the downlink BWP.

6. A communication method, comprising:

   > receiving, by a terminal device, downlink control information from a network device, wherein the downlink control information comprises indication information, and the indication information indicates one of two first minimum applicable slot offsets (minimum KO) that are of a physical downlink shared channel and that are configured for a downlink bandwidth part (BWP) of the terminal device, or the indication information indicates one of two second minimum applicable slot offsets (minimum K2) that are of a physical uplink shared channel and that are configured for an uplink BWP of the terminal device, wherein the two minimum K0 comprise a first value of the two minimum K0 and a second value of the two minimum K0 and are configured for two downlink BWP of the terminal device, the two minimum K2 comprise a first value of the two minimum K2 and a second value of the two minimum K2 and are configured for two uplink BWP of the terminal device, and wherein the indication information indicates the first value of the two minimum K0 configured for an active downlink BWP of the terminal device and the first value of the two minimum K2 configured for an active uplink BWP of the terminal device, in case that the indication information has a first state value, and wherein the indication information indicates the second value of the two minimum K0 configured for the active downlink BWP of the terminal device and the second value of the two minimum K2 configured for the active uplink BWP of the terminal device, in case that the indication information has a second state value; and

determining, by the terminal device, a valid minimum K0 of the downlink BWP and a valid minimum K2 of the uplink BWP based on the downlink control information.

7. The method according to claim 6, wherein:
the minimum K0 configured for the downlink BWP and the minimum K2 configured for the uplink BWP are in a one-to-one correspondence in ascending order of indexes.

8. The method according to claim 6 or 7, wherein when the downlink control information does not indicate the terminal device to switch a currently activated downlink BWP and uplink BWP:

if the downlink control information is for scheduling downlink data, the indication information indicates the one of the two minimum K0 configured for the currently activated downlink BWP of the terminal device; and
if the downlink control information is for scheduling uplink data, the indication information indicates the one of the two minimum K2 configured for the currently activated uplink BWP of the terminal device.

9. The method according to claim 6 or 7, wherein when the downlink control information indicates the terminal device to switch an activated downlink BWP from a currently activated downlink BWP to a to-be-activated downlink BWP, the indication information indicates the one of the two minimum K0 configured for the to-be-activated downlink BWP; or
when the downlink control information indicates the terminal device to switch an activated uplink BWP from a currently activated uplink BWP to a to-be-activated uplink BWP, the indication information indicates the one of the two minimum K2 configured for the to-be-activated uplink BWP.

10. The method according to any one of claims 6 to 9, wherein the determining, by the terminal device, a valid minimum K0 of the downlink BWP and a valid minimum K2 of the uplink BWP based on the downlink control information comprises:

when the indication information indicates the one of the two minimum K0 configured for the downlink BWP of the terminal device, determining, by the terminal device, that the minimum K0 indicated by the indication information is the valid minimum K0 of the downlink BWP of the terminal device, and determining that a minimum K2 that is in the two minimum K2 configured for the uplink BWP of the terminal device and that corresponds to the valid minimum K0 is the valid minimum K2 of the uplink BWP; or
when the indication information indicates the one of the two minimum K2 configured for the uplink BWP of the terminal device, determining, by the terminal device, that the minimum K2 indicated by the indication information is the valid minimum K2 of the uplink BWP of the terminal device, and determining that a minimum K0 that is in the two minimum K0 configured for the downlink BWP of the terminal device and that corresponds to the valid minimum K2 is the valid minimum K0 of the downlink BWP.

11. A communication apparatus, configured to perform the method according to any one of claims 1 to 10.

12. A computer program product comprising instructions which, when executed by a computer, cause the computer to carry out the method of any one of claims 1 to 10.

13. A chip, wherein the chip is connected to a memory or the chip comprises the memory, and is configured to read and execute instructions stored in the memory, to implement the method according to any one of claims 1 to 10.

14. A computer-readable storage medium, comprising instructions, wherein when the instructions is run on a computer, the computer is enabled to perform the method according to any one of claims 1 to 10.

PDCCH

PDSCH

DCI decoding time

Slot i
In a same slot

Slot i
Not in a same slot

FIG. 1

Network device

Terminal device

FIG. 2

FIG. 3

**S401**

A network device sends configuration information to a terminal device, and the terminal device receives the configuration information, where the configuration information includes at least one minimum K0 configured for at least one downlink BWP of the terminal device and at least one minimum K2 configured for at least one uplink BWP of the terminal device

**S402**

The network device sends DCI to the terminal device, and the terminal device receives the DCI

**S403**

The network device and the terminal device determine, based on the DCI, a valid minimum K0 of the downlink BWP of the terminal device and a valid minimum K2 of the uplink BWP of the terminal device

FIG. 4

S501

A network device sends configuration information to a terminal device, and the terminal device receives the configuration information, where the configuration information includes at least one combination of a minimum K0 and a minimum K2 that is configured for at least one downlink BWP of the terminal device

S502

The network device sends DCI to the terminal device, and the terminal device receives the DCI

S503

The network device and the terminal device determine, based on the DCI, a valid minimum K0 of the downlink BWP of the terminal device and a valid minimum K2 of an uplink BWP of the terminal device

FIG. 5

S601

A network device sends configuration information to a terminal device, and the terminal device receives the configuration information, where the configuration information includes at least one combination of a minimum K0 and a minimum K2 that is configured for at least one uplink BWP of the terminal device

S602

The network device sends DCI to the terminal device, and the terminal device receives the DCI

S603

The network device and the terminal device determine, based on the DCI, a valid minimum K0 of a downlink BWP of the terminal device and a valid minimum K2 of the uplink BWP of the terminal device

FIG. 6

S701

A network device sends configuration information to a terminal device, and the terminal device receives the configuration information, where the configuration information includes at least one combination of a minimum K0 and a minimum K2 that is configured for at least one downlink BWP of the terminal device and at least one combination of a minimum K0 and a minimum K2 that is configured for at least one uplink BWP of the terminal device

S702

The network device sends DCI to the terminal device, and the terminal device receives the DCI

S703

The network device and the terminal device determine, based on the DCI, a valid minimum K0 of the downlink BWP of the terminal device and a valid minimum K2 of the uplink BWP of the terminal device

FIG. 7

S801

A network device sends configuration information to a terminal device, and the terminal device receives the configuration information, where the configuration information includes at least one combination of a minimum K0 and a minimum K2 that is configured for at least one pair of a downlink BWP and an uplink BWP of the terminal device

S802

The network device sends DCI to the terminal device, and the terminal device receives the DCI

S803

The network device and the terminal device determine, based on the DCI, a valid minimum K0 of the downlink BWP of the terminal device and a valid minimum K2 of the uplink BWP of the terminal device

FIG. 8

900

Apparatus

Storage unit — 901

Processing unit — 902

Transceiver unit — 903

FIG. 9

Network device 1000

Memory 1020 — Processor 1010 — Transceiver 1030

FIG. 10

1100

Apparatus

Storage unit — 1101

Processing unit — 1102

Transceiver unit — 1103

FIG. 11

Terminal device 1200

| Memory 1220 | Processor 1210 | Transceiver 1230 |

FIG. 12

Antenna

Radio frequency circuit

1310

Memory

Processor

1320

Input/Output apparatus

FIG. 13

1400

1410

1411

1412

Antenna

Radio frequency unit

BBU

RRU

1421 Board 1422

Memory Processor

1420

FIG. 14